# EUROPEAN PATENT APPLICATION

(11) **EP 4 844 701 A2**
(43) Date of publication of application: **25.11.2026**
(21) Application number: 26211320.2
(22) Date of filing: 13.09.2022
(51) Int. Cl.: G06V 10/82

(54) **MACHINE-LEARNING TECHNIQUES FOR PREDICTING PHENOTYPES IN DUPLEX DIGITAL PATHOLOGY IMAGES**

(30) Priority: 17.09.2021 US 202163261308 P
(62) Document number(s) of the earlier application(s) in accordance with Art. 76 EPC: 22783190.6 / 4 402 653
(71) Applicant: Ventana Medical Systems, Inc., Tucson, AZ 85755 (US)
(72) Inventor: MARTIN, Jim F., Arizona, 85755 (US); NIE, Yao, Arizona, 85755 (US); VENUGOPAL, Raghavan, Arizona, 85755 (US)
(74) Representative: Mewburn Ellis LLP

(57) **Abstract**

Duplex immunohistochemistry (IHC) staining of tissue sections allows simultaneous detection of two biomarkers and their co-expression at the single-cell level, and does not require two IHC stains and additional registration to identify co-localization. Duplex IHC are often difficult for human including pathologists to reliably score. The methods and system herein use machine-learning models and probability maps to detect and record individual phenotype ER/PR.

## Description

### CROSS-REFERENCE TO RELATED APPLICATIONS

This application claims the benefit of and priority to U.S. Provisional Patent Application 63/261,308, filed on September 17, 2021, which is hereby incorporated by reference in its entirety for all purposes.

### FIELD

The present disclosure relates to digital pathology, and in particular to techniques for using machine-learning techniques to predict two or more phenotypes in a cell depicted in a duplex digital pathology image.

### BACKGROUND

Digital pathology involves scanning of pathology slides (e.g., histopathology or cytopathology glass slides) into digital images. The tissue and/or cells within the digital images may be subsequently examined by digital pathology image analysis and/or interpreted by a pathologist for a variety of reasons including diagnosis of disease, assessment of a response to therapy, and the development of pharmalogical agents to fight disease. In order to examine the tissue and/or cells within the digital images (which are virtually transparent), the pathology slides may be prepared using various stain assays (e.g., immunostains) that bind selectively to tissue and/or cellular components.

Immunohistochemistry (IHC) staining is used to detect the presence of specific proteins in a specimen affixed to a slide. Estrogen receptor (ER) and progesterone receptor (PR) proteins are important biomarkers that drive clinical management and treatment decisions for breast cancer. Single or singleplex IHC staining includes staining a single slide for a single biomarker. Single IHC staining requires the use of multiple slides to look for the co-localization of biomarkers. In order to look for co-localization, the images of each of the slides must be registered or mapped to each other and then may be overlaid to create a single image showing both biomarkers.

Duplex immunohistochemistry (IHC) staining of tissue sections allows simultaneous detection of two biomarkers on a single slide. Thus, duplex IHC staining allows for the analysis of co-expression of the biomarkers at the single-cell level instead of having two slide each with a single IHC stain and additional registration to identify co-localization. Duplex IHC slides, however, do face certain issues. For example, duplex IHC slides are often difficult for humans (e.g., pathologists) to reliably score. Pathologists often are unable to score on a duplex IHC slide (e.g., ER/PR) directly because the biomarkers are often overlapping and clustered. Moreover, the scoring process can be time consuming as each slide may contain thousands of cells. Thus, the task of correctly identifying and counting expression and co-localization levels is near impossible in practice.

### SUMMARY

In various embodiments, a computer-implemented method of predicting two or more phenotypes in a cell depicted in a duplex digital pathology image is provided. The computer-implemented method includes accessing a digital pathology image depicting at least part of a biological sample that is stained for a first type of biomarker and a second type of biomarker. The computer-implemented method further includes unmixing the digital pathology image to generate: (i) a first synthetic singleplex image depicting the at least part of the biological sample for which the first type of biomarker is identified; and (ii) a second synthetic singleplex image depicting the at least part of the biological sample from which the second type of biomarker is identified. The computer-implemented method further includes applying a first machine-learning model to the first synthetic singleplex image to: (i) detect a first plurality of cells from the first synthetic singleplex image; and determine, for each cell of the first plurality of cells, a classification of a first set of classifications. The classification of the first set indicates whether the cell includes a biomarker having the first biomarker type.

The computer-implemented method further includes applying a second machine-learning model to the second synthetic singleplex image to: (i) detect a second plurality of cells from the second synthetic singleplex image; and (ii) determine, for each cell of the second plurality of cells, a classification of a second set of classifications. The classification of the second set indicates whether the cell includes a biomarker having the second biomarker type. In some instances, the first set of classifications are different from the second set of classifications. The computer-implemented method further includes merging the classifications of the first plurality of cells and the classifications of the second plurality of cells to generate merged classifications. The computer-implemented method further includes outputting the digital pathology image with merged classifications.

In some embodiments, determining the classifications for the first plurality of cells includes generating a first set of probability maps. Each probability map of the first set of probability maps includes a plurality of pixels and is associated with a classification of the first set of classifications. Each probability map of the first set of probability maps also identifies, for each pixel of the plurality of pixels, a probability value indicating whether the pixel corresponds to the classification. Determining the classifications for the first plurality of cells further includes, for each cell of the first plurality of cells: (i) identifying a probability map of the first set of probability maps that includes the highest probability value for one or more pixels that represent the cell; and (ii) assigning the cell with a classification associated with the identified probability map.

In some embodiments, determining the classifications for the second plurality of cells includes generating a second set of probability maps. Each probability map of the second set of probability maps includes a plurality of pixels and is associated with a classification of the second set of classifications. Each probability map of the second set of probability maps also identifies, for each pixel of the plurality of pixels, a probability value indicating whether the pixel corresponds to the classification. Determining the classifications for the second plurality of cells includes , for each cell of the second plurality of cells: (i) identifying a probability map of the second set of probability maps that includes the highest probability value for one or more pixels that represent the cell; and (ii) assigning the cell with a classification associated with the identified probability map.

In some embodiments, the first machine-learning model and/or the second machine-learning model includes a U-Net model.

In some embodiments, the first type of biomarker is an estrogen receptor protein and the second type of biomarker is a progesterone receptor protein.

In some embodiments, outputting the digital pathology image with merged classifications includes overlaying the merged classifications onto the digital pathology image.

In some embodiments, the digital pathology image with merged classifications is used as a training image for training a third machine-learning model.

In some embodiments, determining the classifications for the first plurality of cells includes generating a first set of probability maps. Each probability map of the first set of probability maps includes a plurality of pixels and is associated with a classification of the first set of classifications, in which the probability map identifies, for each pixel of the plurality of pixels, a probability value indicating whether the pixel corresponds to the classification.

In some embodiments, determining the classifications for the second plurality of cells includes generating a second set of probability maps. Each probability map of the second set of probability maps includes a plurality of pixels and is associated with a classification of the second set of classifications, in which the probability map identifies, for each pixel of the plurality of pixels, a probability value indicating whether the pixel corresponds to the classification.

In some embodiments, the first set of probability maps and the second set of probability maps are merged to generate a set of anchor points. Each anchor point of the set of anchor points is assigned with a first classification of the first set of classifications and a second classification of the second set of classifications.

In some embodiments, a system is provided that includes one or more data processors and a non-transitory computer readable storage medium containing instructions which, when executed on the one or more data processors, cause the one or more data processors to perform part or all of one or more methods disclosed herein.

In some embodiments, a computer-program product is provided that is tangibly embodied in a non-transitory machine-readable storage medium and that includes instructions configured to cause one or more data processors to perform part or all of one or more methods disclosed herein.

Some embodiments of the present disclosure include a system including one or more data processors. In some embodiments, the system includes a non-transitory computer readable storage medium containing instructions which, when executed on the one or more data processors, cause the one or more data processors to perform part or all of one or more methods and/or part or all of one or more processes disclosed herein. Some embodiments of the present disclosure include a computer-program product tangibly embodied in a non-transitory machine-readable storage medium, including instructions configured to cause one or more data processors to perform part or all of one or more methods and/or part or all of one or more processes disclosed herein.

The terms and expressions which have been employed are used as terms of description and not of limitation, and there is no intention in the use of such terms and expressions of excluding any equivalents of the features shown and described or portions thereof, but it is recognized that various modifications are possible within the scope of the invention claimed. Thus, it should be understood that although the present invention as claimed has been specifically disclosed by embodiments and optional features, modification and variation of the concepts herein disclosed may be resorted to by those skilled in the art, and that such modifications and variations are considered to be within the scope of this invention as defined by the appended claims.

### BRIEF DESCRIPTION OF THE DRAWINGS

Aspects and features of the various embodiments will be more apparent by describing examples with reference to the accompanying drawings, in which:
FIG. 1 shows a schematic diagram that illustrates an image-processing system 100 that uses machine-learning techniques to merge phenotypes detected in synthetic singleplex images, according to some embodiments.
FIG. 2 shows an exemplary network for generating digital pathology images, according to some embodiments.
FIG. 3 shows a block diagram that illustrates a computing environment for processing digital pathology images using a machine learning model, according to some embodiments.
FIG. 4 shows an example of Duplex ER/PR and adjacent singleplex IHC ER/PR, according to some embodiments.
FIG. 5 shows fields of view (FOVs) selected from a duplex ER/PR image and registered on singleplex IHC ER and IHC PR images, according to some embodiments.
FIGS. 6A-C show example techniques for generating synthetic singleplex images, according to some embodiments.
FIG. 7 illustrates example initial seed locations for dabsyl ER and tamra PR obtained by pre-trained U-Net model, according to some embodiments.
FIG. 8 shows an example architecture of a machine-learning model used for detecting phenotypes in duplex slide iamges, according to some embodiments.
FIG. 9A shows a residual block according to some embodiments.
FIG. 9B shows a pyramidal layer according to some embodiments.
FIG. 10 illustrates a process for training machine-learning models to detect phenotypes in duplex images, in accordance with some embodiments.
FIGS. 11 shows example seed locations and different class labels generated by two models, according to some embodiments.
FIG. 12 illustrates five probability maps generated by an ER model, according to some embodiments.
FIG. 13 illustrates computation of five merged probability maps between probability maps generated by two U-Net models in ER and PR channels, according to some embodiments.
FIG. 14 illustrates examples of anchor points obtained by searching the merged probability maps between the ER and PR channels, according to some embodiments.
FIG. 15 illustrates an example anchor point at the pixel level and surrounding ER+ and PR+ points, according to some embodiments.
FIG. 16 illustrates example label graphs determined from the probability maps, according to some embodiments.
FIG. 17 illustrates an example of assigning anchor point into ER+/ER-/other, according to some embodiments.
FIG. 18 illustrates a process for assigning anchor points to ER+/ER-/other in a synthetic ER image, according to some embodiments.
FIG. 19 illustrates an example of assigning anchor point into PR+/PR-/other, according to some embodiments.
FIG. 20 illustrates a process for assigning anchor points to PR+/PR-/other in a synthetic PR image, according to some embodiments.
FIG. 21 illustrates examples of merged phenotypes overlaid in the duplex images, according to some embodiments.
FIG. 22 illustrates a process for using trained machine-learning models to detect phenotypes in duplex images, according to some embodiments.
FIG. 23 illustrates the training pipeline using the merged phenotype for duplex ER/PR algorithm, according to some embodiments.
FIGS. 24A-B illustrate the consensus scores of three pathologists and the U-Net and merge phenotype algorithm, according to some embodiments.
FIG. 25 illustrates examples of the phenotype detection of results duplex ER/PR, according to some embodiments.
FIG. 26A-B illustrate examples of duplex ER/PR with different types of phenotypes according to some embodiments.

### DETAILED DESCRIPTION

Existing techniques generally involve detecting cells from a digital pathology image using a cell-detection algorithm, then applying a machine-learning model to the detected cells to predict whether a particular type of biomarker is present in one or more of the detected cells. Performance of these machine-learning models typically depends on the accuracy of the training dataset. Generating the training dataset can include labeling cells depicted in one or more training images of the training dataset, in which the label can be added by one or more pathologists. The labeling process can become difficult for a duplex image that is stained to identify two or more types of biomarkers. This is because two or more stains can form unrecognizable clusters in different regions of the duplex image and/or may be present in the same image region within the duplex image. Such staining characteristics can result in a confusion as to how the cell region should be properly labeled. Such difficulty can lead to the training images being associated with inaccurate or inconsistent training labels, which further leads to performance degradation of machine-learning models that are trained with such training images to predict presence of two or more biomarkers in cells depicted in other duplex images.

Certain embodiments described herein can thus address these problems and others by accurately predicting phenotypes of cells relating to two or more types of biomarkers in cells depicted in a duplex image. An image-processing system can access a duplex slide image. The duplex image depicts at least part of a biological sample, such as a section of a breast tissue. The at least part of the biological sample can be stained to identify two or more types of biomarkers. For example, a first type of biomarker can be an estrogen receptor (ER), and a second type of biomarker can be a progesterone receptor (PR).

The image-processing system can process the duplex image to generate a set of synthetic singleplex images. Each synthetic singleplex image of the set of synthetic singleplex images can be generated to depict cells stained for a single biomarker (e.g., ER). In some instances, a synthetic singleplex image is generated by: (i) generating a pre-processed image depicting cells stained for a corresponding biomarker; and (ii) combining the pre-processed image with a counterstain image. The use of the counterstain image can allow the biomarker to be visually distinguished from other cell structures depicted in the pre-processed image.

For each synthetic singleplex image of the set of synthetic singleplex images, the image-processing system can apply a machine-learning model to the synthetic singleplex image to predict a phenotype of each detected cell depicted in the synthetic singleplex image, in which the phenotype relates to a corresponding type of biomarker. In some instances, the machine-learning model is trained to process a first synthetic singleplex image that depict cells stained for a first type of biomarker, and a different machine-learning model is trained to process a second synthetic singleplex image stained for a second type of biomarker. For example, the image-processing system can apply a first trained U-Net model to a synthetic singleplex image stained for an ER biomarker to: (i) detect the cells in the synthetic singleplex image; and (ii) predict, for each of the detected cells, a phenotype of the cell for the ER biomarker (e.g., ER positive, ER negative, artifact). Continuing with this example, the image-processing system can the apply a second trained U-Net model to another synthetic singleplex image stained for a PR biomarker to: (i) detect the cells in the other synthetic singleplex image; and (ii) predict, for each of the detected cells, a phenotype of the cell for the PR biomarker (e.g., PR positive, PR negative, artifact).

In some instances, the machine-learning model is trained to determine, for each cell in the synthetic singleplex image, a classification from a set of classifications. Each classification of the set can corresponds to a particular phenotype of the cell for the corresponding type of biomarker. For example, the machine-learning model can output whether a detected cell: (i) includes the ER biomarker (ER+); (ii) does not include the ER biomarker (ER-); (iii) corresponds to a stroma cell; (iv) corresponds to an immune cell; or (v) corresponds to an artifact or other types of biological structures. To generate the classifications, the image-processing system can process the synthetic singleplex image using the machine-learning model to generate a set of probability maps. Each probability map of the set of probability maps can represent a plurality of pixels of the synthetic singleplex image and correspond to a particular classification of the set of classifications. For each pixel of the plurality of pixels, the probability map includes a probability value that indicates whether the pixel corresponds to the classification. Continuing from this example, the set of probability maps for the synthetic singleplex image can include a first probability map for ER+, a second probability map for ER-, a third probability map for the stroma cell, a fourth probability map for the immune cell, and a fifth probability map for the artifact.

The set of probability maps that represent the synthetic singleplex image can be merged with another set of probability maps that represent the other synthetic singleplex image to generate a merged set of probability maps. The merged set of probability maps can be used to determine a set of locations ("anchor points") in the duplex image, at which presence of one or more biomarkers can be identified for each anchor point. Continuing from the above example, a first set of probability maps can represent a synthetic singleplex image stained for ER biomarkers, in which the first set of probability maps includes: (i) a first probability map for ER+ classification; (ii) a second probability map for ER- classification; (iii) a third probability map for stromal cell classification; (iv) a fourth probability map for immune cell classification; and (v) a fifth probability map for artifact classification. In addition, a second set of probability maps can represent a synthetic singleplex image stained for PR biomarkers, in which the second set of probability maps includes: (i) a first probability map for PR+ classification; (ii) a second probability map for PR- classification; (iii) a third probability map for stromal cell classification; (iv) a fourth probability map for immune cell classification; and (v) a fifth probability map for artifact classification.

The image-processing system can generate a first probability map of the merged set by comparing, for each pixel, a probability value of the ER+ probability map of the first set of probability maps with another probability value of the PR+ probability map of the second set of probability maps. Based on the comparison, the higher probability value and its corresponding classification (e.g., ER+) can then be assigned to a respective pixel of the first probability map (e.g., ER+/PR+) of the merged set. The comparing and assigning steps can iterate through other pixels to generate the first probability map of the merged set. The above steps can also be repeated to generate other probability maps (e.g., ER-/PR-, ER+/PR-, ER-/PR+, others) of the merged set.

The image-processing system can use the merged set of probability maps to identify the set of anchor points for the duplex image. Each anchor point of the set of anchor points can correspond to a region (e.g., cell center) in the duplex image that can be predicted as having an individual biomarker or multiple biomarkers. To determine an anchor point, the image-processing system can select a region of the duplex image, in which the region includes a set of pixels. The image-processing system can obtain, from each probability map of the merged set, a set of probability values for the region, in which each probability value indicates whether a corresponding pixel of the region identifies whether the pixel corresponds to the classification associated with the probability map. From the sets of pixels across the merged set of probability maps, the image-processing system can select a pixel having the highest probability value and assigns the selected pixel as the anchor point.

Each anchor point of the set of anchor points can be labeled with one or more corresponding classifications that predict whether the image region represented by the anchor point indicates presence of an individual marker or multiple biomarkers. For example, an anchor point can be labeled with an ER+ classification based on the anchor point being within a predetermined distance (e.g., 10 pixels) from a region of the ER+ probability map that was predicted to include the ER biomarker. Continuing from this example, the same anchor point can also be labeled with a PR+ classification based on the anchor point being within a predetermined distance (e.g., 10 pixels) from a region of the PR+ probability map that has been predicted to include the PR biomarker. As a result, the region of the duplex image that corresponds to the anchor point can be labeled as a cell having a phenotype indicative of a presence of two types of biomarkers (e.g., ER+/PR+). Incorporating probability values of the probability maps into the anchor points of the duplex image allows the duplex image to include one or more regions that identify a phenotype of cells for the multiple biomarkers. The anchor points with the merged phenotypes can be overlaid onto the duplex image, thereby accurately displaying a phenotype corresponding to multiple biomarkers for a given image region of the duplex image.

Certain embodiments described herein improve performance of machine-learning models that identify co-localization or co-expression of biomarkers in duplex images. The image-processing system can improve the performance by generating synthetic singleplex images from the duplex image, applying separate machine-learning models to the synthetic singleplex images, and merging probability maps generated by the machine-learning models to output multiple classifications for each cell depicted in the duplex image. The image-processing system can perform accurately even when multiple types of biomarkers are mixed and clustered within the same duplex image. Accordingly, embodiments herein reflect an improvement in functions of artificial-intelligence systems and digital-pathology image processing technology.

While certain embodiments are described, these embodiments are presented by way of example only, and are not intended to limit the scope of protection. The apparatuses, methods, and systems described herein may be embodied in a variety of other forms. Furthermore, various omissions, substitutions, and changes in the form of the example methods and systems described herein may be made without departing from the scope of protection.

### I. DEFINITIONS

As used herein, when an action is "based on" something, this means the action is based at least in part on at least a part of the something.

As used herein, the terms "substantially," "approximately," and "about" are defined as being largely but not necessarily wholly what is specified (and include wholly what is specified) as understood by one of ordinary skill in the art. In any disclosed embodiment, the term "substantially," "approximately," or "about" may be substituted with "within [a percentage] of" what is specified, where the percentage includes 0.1, 1, 5, and 10 percent.

As used herein, the term "sample," "biological sample," "tissue," or "tissue sample" refers to any sample including a biomolecule (such as a protein, a peptide, a nucleic acid, a lipid, a carbohydrate, or a combination thereof) that is obtained from any organism including viruses. Other examples of organisms include mammals (such as humans; veterinary animals like cats, dogs, horses, cattle, and swine; and laboratory animals like mice, rats and primates), insects, annelids, arachnids, marsupials, reptiles, amphibians, bacteria, and fungi. Biological samples include tissue samples (such as tissue sections and needle biopsies of tissue), cell samples (such as cytological smears such as Pap smears or blood smears or samples of cells obtained by microdissection), or cell fractions, fragments or organelles (such as obtained by lysing cells and separating their components by centrifugation or otherwise). Other examples of biological samples include blood, serum, urine, semen, fecal matter, cerebrospinal fluid, interstitial fluid, mucous, tears, sweat, pus, biopsied tissue (for example, obtained by a surgical biopsy or a needle biopsy), nipple aspirates, cerumen, milk, vaginal fluid, saliva, swabs (such as buccal swabs), or any material containing biomolecules that is derived from a first biological sample. In some embodiments, the term "biological sample" as used herein refers to a sample (such as a homogenized or liquefied sample) prepared from a tumor or a portion thereof obtained from a subject.

As used herein, the term "biological material," "biological structure," or "cell structure" refers to natural materials or structures that comprise a whole or a part of a living structure (e.g., a cell nucleus, a cell membrane, cytoplasm, a chromosome, DNA, a cell, a cluster of cells, or the like).

As used herein, the term "biomarker" refers to a biological molecule (e.g., a protein molecule) found in blood, other body fluids, or tissues that is a sign of a normal or abnormal process, or of a condition or disease. The biomarker can be associated with a particular type of biomarker. For example, a biomarker can be an estrogen receptor (ER) or a progesterone receptor (PR).

As used herein, a "digital pathology image" refers to a digital image of a stained sample.

As used herein, a "phenotype" refers to a cell type that expresses characteristics associated with a corresponding biomarker in a digital pathology image. For example, a phenotype for an estrogen receptor at a region of a duplex image can identify a presence of the estrogen receptor (ER+), and a phenotype of a progesterone receptor for the same region can identify an absence of a progesterone receptor (PR-). The phenotype can be merged and used to define characteristics of multiple biomarkers (e.g., ER+/PR+).

As used herein, a "synthetic singleplex image" refers to a digital pathology image that is generated from a duplex image, in which the synthetic singleplex image is generated by combining: (a) a single-stained image derived from the duplex image; and (ii) a counterstain image. The synthetic singleplex image can identify a particular phenotype.

As used herein, a "duplex image" refers to a digital pathology image that has been stained to identify two or more biomarkers (e.g., ER, PR).

As used herein, an "anchor point" refers to a region (e.g., cell center) of a digital pathology image (e.g., a duplex image) that can be predicted as having an individual biomarker or multiple biomarkers .

### II. OVERVIEW

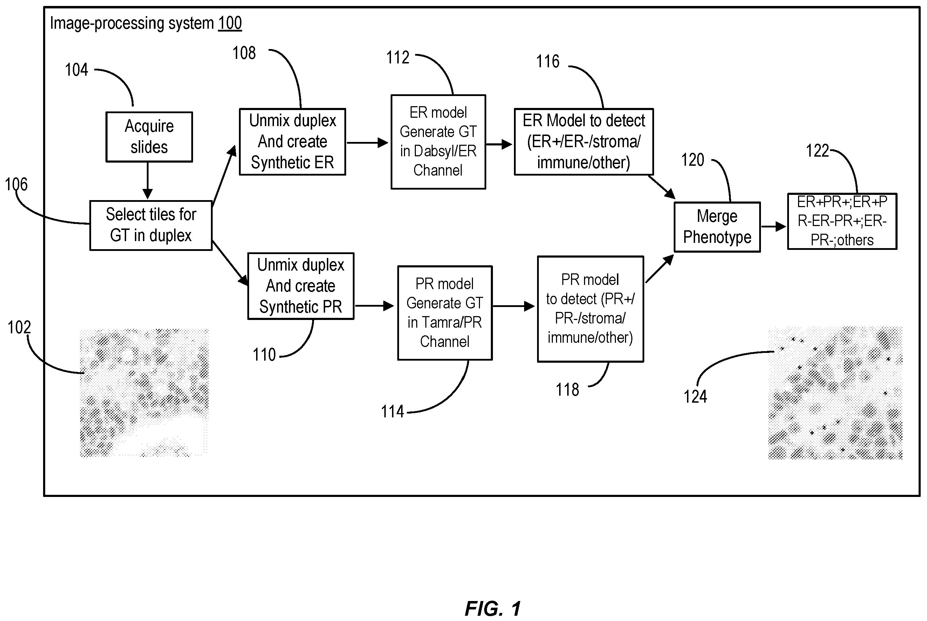

A deep learning-based system and method can be used to generate synthetic singleplex images from a duplex image, identify phenotypes of cells detected from each of the synthetic singleplex images, and merge the identified phenotypes to determine image regions that include two or more biomarkers. FIG. 1 shows a schematic diagram that illustrates an image-processing system 100 that uses machine-learning techniques to merge phenotypes detected in synthetic singleplex images, according to some embodiments. An image-processing system can be configured to receive an image of a pathology slide 102 that has been stained to show two or more types of biomarkers (block 104). In some embodiments, the image-processing system is configured to operate using images of duplex slides that have been stained to show the presence of estrogen receptor (ER) and progesterone receptor (PR) proteins. Each cell in the image can be classified as being positive or negative for each of the ER and PR markers. Thus, a phenotype of each cell can be identified as ER+PR+, ER+PR-, ER-PR+, ER-PR-, or other (e.g., stroma, immune, necrosis, artifacts, etc.).

In some instances, the image-processing system divides the duplex slide image into a plurality of image tiles (block 106). The identification of cell phenotypes for the multiple biomarkers can be performed for each of the plurality of image tiles. In some instances, a set of image tiles are selected from the plurality of image tiles, in which the set of image tiles are used as training images for training one or more machine-learning models to detect cell phenotypes for types of biomarkers.

The image-processing system can unmix the duplex image to generate a set of synthetic singleplex images (blocks 108 and 110). Each synthetic singleplex image of the set of synthetic singleplex images can be generated to depict cells stained for a single biomarker (e.g., ER). In some instances, a synthetic singleplex image is generated by: (i) generating a pre-processed image depicting cells stained for a corresponding biomarker; and (ii) combining the pre-processed image with a counterstain image.

In some embodiments, the image-processing system uses the set of image tiles to train machine-learning models (e.g., U-Net models) to predict phenotypes for each detected cell in the synthetic singleplex images. For example, a first machine-learning model can be trained using the set of image tiles to predict cell phenotypes for an ER biomarker (block 112), and a second machine-learning model can be trained using the set of image tiles to predict cell phenotypes for a PR biomarker (block 114).

The trained machine-learning models can then be used to detect cell phenotypes in corresponding synthetic singleplex images (blocks 116 and 118). For example, the image-processing system can use two U-Net models to generate a plurality of probability maps (e.g., 10 probability maps), in which the plurality of probability maps can be used to detect cell phenotypes for ER and PR. For example, five of the ten probability maps can represent a synthetic singleplex image stained for ER biomarker, in which the probability maps includes: (i) a first probability map for ER+ classification; (ii) a second probability map for ER- classification; (iii) a third probability map for stromal cell classification; (iv) a fourth probability map for immune cell classification; and (v) a fifth probability map for artifact classification. The remaining five probability maps can represent the synthetic singleplex image stained for PR biomarker.

The image-processing system can then merge cell phenotypes predicted by the two machine-learning models (block 120). In some instances, a logical "AND" is used to directly calculate to which phenotype each cell belongs. A probabilistic priority can be used to merge all different co-expressions of biomarkers and identify a cell phenotype that relates to identification of multiple types of biomarkers. In some embodiments, the image-processing system determines an anchor point to be the cell center of each nucleus (including ER+/PR+/ER-/PR-/others). The anchor point can be obtained by comparing 10 probability maps generated by two machine-learning models (e.g., an ER model and a PR model) trained by two deep learning networks. Then, the system can match each anchor point with ER+/ER-/other classifications generated by a first machine-learning model (the "ER model"). The system can also match each anchor point with PR+/PR-/others generated by a second machine-learning model (the "PR model"). In some instances, a data structure is used to record all the locations of phenotype/biomarker ER/PR and can be associated with a map that records the anchor points/cell centers of nucleus. Logical operators (e.g., "AND") and probabilistic priorities can be used to merge all the different co-expressions. As a result, the merged phenotypes that represent the multiple biomarkers can be identified for the duplex slide image (block 122). In some instances, the image-processing system overlays the merged phenotypes onto the duplex image, as shown in image 124. The use of two machine-learning models and the described mapping method significantly reduces the computation and detection time when compared to alternative methodologies.

### III. GENERATING DIGITAL PATHOLOGY IMAGES

Digital pathology involves the interpretation of digitized images in order to correctly diagnose subjects and guide therapeutic decision making. In digital pathology solutions, image-analysis workflows can be established to automatically detect or classify biological objects of interest e.g., positive, negative tumor cells, etc. An exemplary digital pathology solution workflow includes obtaining tissue slides, scanning preselected areas or the entirety of the tissue slides with a digital image scanner (e.g., a whole slide image (WSI) scanner) to obtain digital images, performing image analysis on the digital image using one or more image analysis algorithms, and potentially detecting, quantifying (e.g., counting or identify object-specific or cumulative areas of) each object of interest based on the image analysis (e.g., quantitative or semi-quantitative scoring such as positive, negative, medium, weak, etc.).

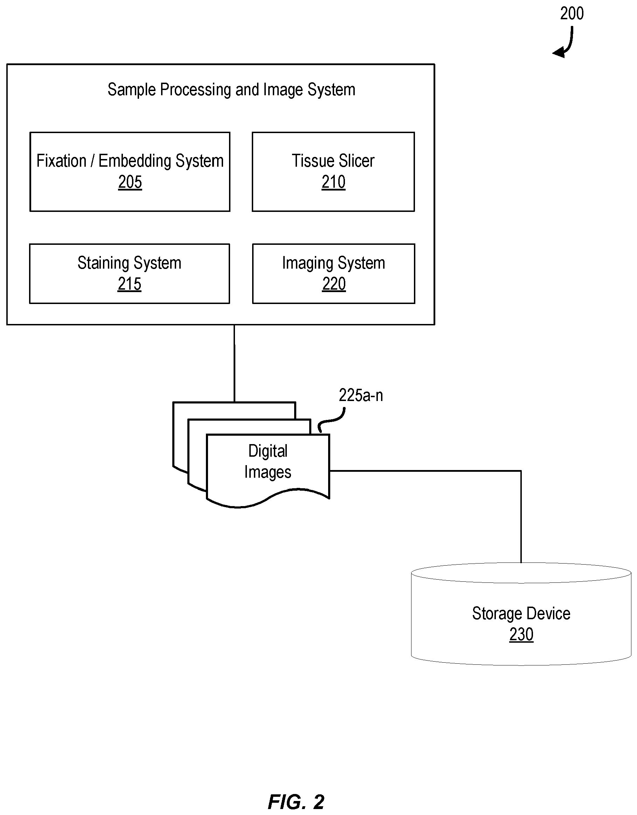

FIG. 2 shows an exemplary network 200 for generating digital pathology images. A fixation/embedding system 205 fixes and/or embeds a tissue sample (e.g., a sample including at least part of at least one tumor) using a fixation agent (e.g., a liquid fixing agent, such as a formaldehyde solution) and/or an embedding substance (e.g., a histological wax, such as a paraffin wax and/or one or more resins, such as styrene or polyethylene). Each sample may be fixed by exposing the sample to a fixating agent for a predefined period of time (e.g., at least 3 hours) and by then dehydrating the sample (e.g., via exposure to an ethanol solution and/or a clearing intermediate agent). The embedding substance can infiltrate the sample when it is in liquid state (e.g., when heated).

Sample fixation and/or embedding is used to preserve the sample and slow down sample degradation. In histology, fixation generally refers to an irreversible process of using chemicals to retain the chemical composition, preserve the natural sample structure, and maintain the cell structure from degradation. Fixation may also harden the cells or tissues for sectioning. Fixatives may enhance the preservation of samples and cells using cross-linking proteins. The fixatives may bind to and cross-link some proteins, and denature other proteins through dehydration, which may harden the tissue and inactivate enzymes that might otherwise degrade the sample. The fixatives may also kill bacteria.

The fixatives may be administered, for example, through perfusion and immersion of the prepared sample. Various fixatives may be used, including methanol, a Bouin fixative and/or a formaldehyde fixative, such as neutral buffered formalin (NBF) or paraffin-formalin (paraformaldehyde-PFA). In cases where a sample is a liquid sample (e.g., a blood sample), the sample may be smeared onto a slide and dried prior to fixation. While the fixing process may serve to preserve the structure of the samples and cells for the purpose of histological studies, the fixation may result in concealing of tissue antigens thereby decreasing antigen detection. Thus, the fixation is generally considered as a limiting factor for immunohistochemistry because formalin can cross-link antigens and mask epitopes. In some instances, an additional process is performed to reverse the effects of cross-linking, including treating the fixed sample with citraconic anhydride (a reversible protein cross-linking agent) and heating.

Embedding may include infiltrating a sample (e.g., a fixed tissue sample) with a suitable histological wax, such as paraffin wax. The histological wax may be insoluble in water or alcohol, but may be soluble in a paraffin solvent, such as xylene. Therefore, the water in the tissue may need to be replaced with xylene. To do so, the sample may be dehydrated first by gradually replacing water in the sample with alcohol, which can be achieved by passing the tissue through increasing concentrations of ethyl alcohol (e.g., from 0 to about 100%). After the water is replaced by alcohol, the alcohol may be replaced with xylene, which is miscible with alcohol. Because the histological wax may be soluble in xylene, the melted wax may fill the space that is filled with xylene and was filled with water before. The wax filled sample may be cooled down to form a hardened block that can be clamped into a microtome, vibratome, or compresstome for section cutting. In some cases, deviation from the above example procedure may result in an infiltration of paraffin wax that leads to inhibition of the penetration of antibody, chemical, or other fixatives.

A tissue slicer 210 may then be used for sectioning the fixed and/or embedded tissue sample (e.g., a sample of a tumor). Sectioning is the process of cutting thin slices (e.g., a thickness of, for example, 2-5 µm) of a sample from a tissue block for the purpose of mounting it on a microscope slide for examination. Sectioning may be performed using a microtome, vibratome, or compresstome. In some cases, tissue can be frozen rapidly in dry ice or Isopentane, and can then be cut in a refrigerated cabinet (e.g., a cryostat) with a cold knife. Other types of cooling agents can be used to freeze the tissues, such as liquid nitrogen. The sections for use with brightfield and fluorescence microscopy are generally on the order of 2-10 µm thick. In some cases, sections can be embedded in an epoxy or acrylic resin, which may enable thinner sections (e.g., < 2 µm) to be cut. The sections may then be mounted on one or more glass slides. A coverslip may be placed on top to protect the sample section.

Because the tissue sections and the cells within them are virtually transparent, preparation of the slides typically further includes staining (e.g., automatically staining) the tissue sections in order to render relevant structures more visible. In some instances, the staining is performed manually. In some instances, the staining is performed semi-automatically or automatically using a staining system 215. The staining process includes exposing sections of tissue samples or of fixed liquid samples to one or more different stains (e.g., consecutively or concurrently) to express different characteristics of the tissue.

For example, staining may be used to mark particular types of cells and/or to flag particular types of nucleic acids and/or proteins to aid in the microscopic examination. The staining process generally involves adding a dye or stain to a sample to qualify or quantify the presence of a specific compound, a structure, a molecule, or a feature (e.g., a subcellular feature). For example, stains can help to identify or highlight specific biomarkers from a tissue section. In other example, stains can be used to identify or highlight biological tissues (e.g., muscle fibers or connective tissue), cell populations (e.g., different blood cells), or organelles within individual cells.

One exemplary type of tissue staining is histochemical staining, which uses one or more chemical dyes (e.g., acidic dyes, basic dyes, chromogens) to stain tissue structures. Histochemical staining may be used to indicate general aspects of tissue morphology and/or cell microanatomy (e.g., to distinguish cell nuclei from cytoplasm, to indicate lipid droplets, etc.). One example of a histochemical stain is H&E. Other examples of histochemical stains include trichrome stains (e.g., Masson's Trichrome), Periodic Acid-Schiff (PAS), silver stains, and iron stains. The molecular weight of a histochemical staining reagent (e.g., dye) is typically about 500 kilodaltons (kD) or less, although some histochemical staining reagents (e.g., Alcian Blue, phosphomolybdic acid (PMA)) may have molecular weights of up to two or three thousand kD. One case of a high-molecular-weight histochemical staining reagent is alpha-amylase (about 55 kD), which may be used to indicate glycogen.

Another type of tissue staining is IHC, also called "immunostaining", which uses a primary antibody that binds specifically to the target antigen of interest (also called a biomarker). IHC may be direct or indirect. In direct IHC, the primary antibody is directly conjugated to a label (e.g., a chromophore or fluorophore). In indirect IHC, the primary antibody is first bound to the target antigen, and then a secondary antibody that is conjugated with a label (e.g., a chromophore or fluorophore) is bound to the primary antibody. The molecular weights of IHC reagents are much higher than those of histochemical staining reagents, as the antibodies have molecular weights of about 150 kD or more.

Various types of staining protocols may be used to perform the staining. For example, an exemplary IHC staining protocol includes using a hydrophobic barrier line around the sample (e.g., tissue section) to prevent leakage of reagents from the slide during incubation, treating the tissue section with reagents to block endogenous sources of nonspecific staining (e.g., enzymes, free aldehyde groups, immunoglobins, other irrelevant molecules that can mimic specific staining), incubating the sample with a permeabilization buffer to facilitate penetration of antibodies and other staining reagents into the tissue, incubating the tissue section with a primary antibody for a period of time (e.g., 1-24 hours) at a particular temperature (e.g., room temperature, 6-8°C), rinsing the sample using wash buffer, thencubating the sample (tissue section) with a secondary antibody for another period of time at another particular temperature (e.g., room temperature), rinsing the sample again using water buffer, incubating the rinsed sample with a chromogen (e.g., DAB: 3,3'-diaminobenzidine), and washing away the chromogen to stop the reaction. In some instances, counterstaining is subsequently used to identify an entire "landscape" of the sample and serve as a reference for the main color used for the detection of tissue targets. Examples of the counterstains may include hematoxylin (stains from blue to violet), Methylene blue (stains blue), toluidine blue (stains nuclei deep blue and polysaccharides pink to red), nuclear fast red (also called Kernechtrot dye, stains red), and methyl green (stains green); non-nuclear chromogenic stains, such as eosin (stains pink), etc. A person of ordinary skill in the art will recognize that other immunohistochemistry staining techniques can be implemented to perform staining.

In another example, an H&E staining protocol can be performed for the tissue section staining. The H&E staining protocol includes applying hematoxylin stain mixed with a metallic salt, or mordant to the sample. The sample can then be rinsed in a weak acid solution to remove excess staining (differentiation), followed by bluing in mildly alkaline water. After the application of hematoxylin, the sample can be counterstained with eosin. It will be appreciated that other H&E staining techniques can be implemented.

In some embodiments, various types of stains can be used to perform staining, depending on which features of interest is targeted. For example, DAB can be used for various tissue sections for the IHC staining, in which the DAB results a brown color depicting a feature of interest in the stained image. In another example, alkaline phosphatase (AP) can be used for skin tissue sections for the IHC staining, since DAB color may be masked by melanin pigments. With respect to primary staining techniques, the applicable stains may include, for example, basophilic and acidophilic stains, hematin and hematoxylin, silver nitrate, trichrome stains, and the like. Acidic dyes may react with cationic or basic components in tissues or cells, such as proteins and other components in the cytoplasm. Basic dyes may react with anionic or acidic components in tissues or cells, such as nucleic acids. As noted above, one example of a staining system is H&E. Eosin may be a negatively charged pink acidic dye, and hematoxylin may be a purple or blue basic dye that includes hematein and aluminum ions. Other examples of stains may include periodic acid-Schiff reaction (PAS) stains, Masson's trichrome, Alcian blue, van Gieson, Reticulin stain, and the like. In some embodiments, different types of stains may be used in combination.

The sections may then be mounted on corresponding slides, which an imaging system 220 can then scan or image to generate raw digital-pathology images 225a-n. A microscope (e.g., an electron or optical microscope) can be used to magnify the stained sample. For example, optical microscopes may have a resolution less than 1 µm, such as about a few hundred nanometers. To observe finer details in nanometer or sub-nanometer ranges, electron microscopes may be used. An imaging device (combined with the microscope or separate from the microscope) images the magnified biological sample to obtain the image data, such as a multi-channel image (e.g., a multi-channel fluorescent) with several (such as between ten to sixteen, for example) channels. The imaging device may include, without limitation, a camera (e.g., an analog camera, a digital camera, etc.), optics (e.g., one or more lenses, sensor focus lens groups, microscope objectives, etc.), imaging sensors (e.g., a charge-coupled device (CCD), a complimentary metal-oxide semiconductor (CMOS) image sensor, or the like), photographic film, or the like. In digital embodiments, the imaging device can include a plurality of lenses that cooperate to prove on-the-fly focusing. An image sensor, for example, a CCD sensor can capture a digital image of the biological sample. In some embodiments, the imaging device is a brightfield imaging system, a multispectral imaging (MSI) system or a fluorescent microscopy system. The imaging device may utilize nonvisible electromagnetic radiation (UV light, for example) or other imaging techniques to capture the image. For example, the imaging device may comprise a microscope and a camera arranged to capture images magnified by the microscope. The image data received by the analysis system may be identical to and/or derived from raw image data captured by the imaging device.

The images of the stained sections may then be stored in a storage device 225 such as a server. The images may be stored locally, remotely, and/or in a cloud server. Each image may be stored in association with an identifier of a subject and a date (e.g., a date when a sample was collected and/or a date when the image was captured). An image may further be transmitted to another system (e.g., a system associated with a pathologist, an automated or semi-automated image analysis system, or a machine learning training and deployment system, as described in further detail herein).

It will be appreciated that modifications to processes described with respect to network 200 are contemplated. For example, if a sample is a liquid sample, embedding and/or sectioning may be omitted from the process.

### IV. EXEMPLARY SYSTEM FOR DIGITAL PATHOLOGY IMAGE TRANSFORMATION

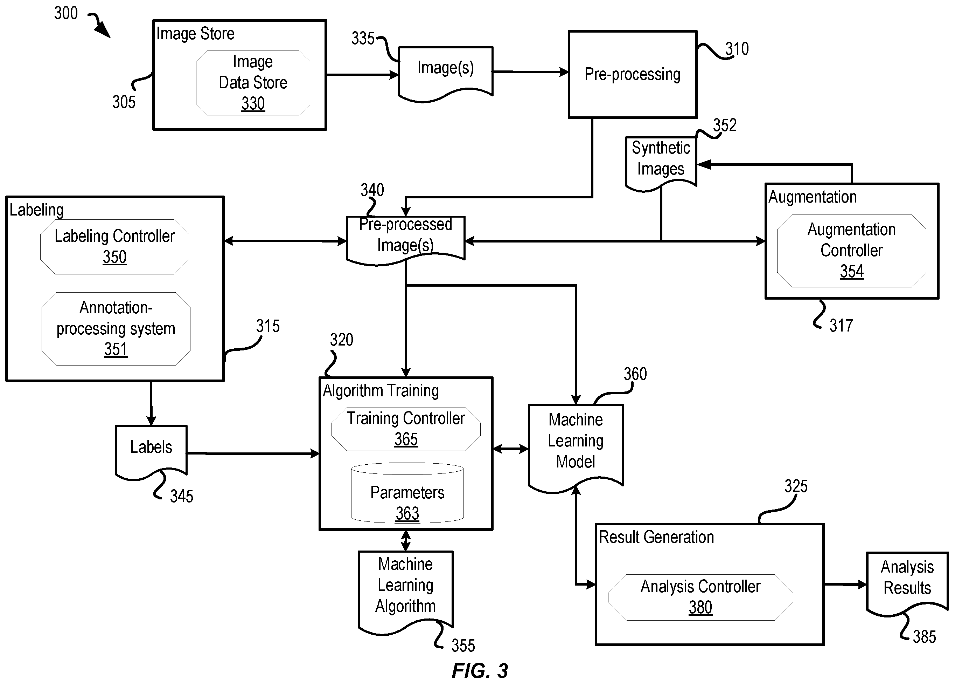

FIG. 3 shows a block diagram that illustrates a computing environment 300 for processing digital pathology images using a machine learning model, according to some embodiments. As further described herein, processing a digital pathology image can include using the digital pathology image to train a machine learning algorithm and/or transforming part or all of the digital pathology image into one or more results using a trained (or partly trained) version of the machine learning algorithm (i.e., a machine learning model).

As shown in FIG. 3, computing environment 300 includes several stages: an image store stage 305, a pre-processing stage 310, a labeling stage 315, a data augmentation stage 317, a training stage 320, and a result generation stage 325.

### A. Image store stage

The image store stage 305 includes one or more image data stores 330 (e.g., storage device 230 described with respect to FIG. 2) that are accessed (e.g., by pre-processing stage 310) to provide a set of digital images 335 of preselected areas from or the entirety of the biological sample slides (e.g., tissue slides). Each digital image 335 stored in each image data store 330 and accessed at image store stage 310 may include a digital pathology image generated in accordance with part or all of processes described with respect to network 200 depicted in FIG. 2. In some embodiments, each digital image 335 includes image data from one or more scanned slides. Each of the digital images 335 may correspond to image data from a single specimen and/or a single day on which the underlying image data corresponding to the image was collected.

The image data may include an image, as well as any information related to color channels or color wavelength channels, as well as details regarding the imaging platform on which the image was generated. For instance, a tissue section may need to be stained by means of application of a staining assay containing one or more different biomarkers associated with chromogenic stains for brightfield imaging or fluorophores for fluorescence imaging. Staining assays can use chromogenic stains for brightfield imaging, organic fluorophores, quantum dots, or organic fluorophores together with quantum dots for fluorescence imaging, or any other combination of stains, biomarkers, and viewing or imaging devices. Example biomarkers include biomarkers for estrogen receptors (ER), human epidermal growth factor receptors 2 (HER2), human Ki-67 protein, progesterone receptors (PR), programmed cell death protein 1 (PD1), and the like, where the tissue section is detectably labeled with binders (e.g., antibodies) for each of ER, HER2, Ki-67, PR, PD1, etc. In some embodiments, digital image and data analysis operations such as classifying, scoring, cox modeling, and risk stratification are dependent upon the type of biomarker being used as well as the field-of-view (FOV) selection and annotations. Moreover, a typical tissue section is processed in an automated staining/assay platform that applies a staining assay to the tissue section, resulting in a stained sample. There are a variety of commercial products on the market suitable for use as the staining/assay platform, one example being the VENTANA^{®} SYMPHONY^{®} product of the assignee Ventana Medical Systems, Inc. Stained tissue sections may be supplied to an imaging system, for example on a microscope or a whole-slide scanner having a microscope and/or imaging components, one example being the VENTANA^{®} iScan Coreo^{®}/ VENTANA^{®} DP200 product of the assignee Ventana Medical Systems, Inc. Multiplex tissue slides may be scanned on an equivalent multiplexed slide scanner system. Additional information provided by the imaging system may include any information related to the staining platform, including a concentration of chemicals used in staining, a reaction times for chemicals applied to the tissue in staining, and/or pre-analytic conditions of the tissue, such as a tissue age, a fixation method, a duration, how the section was embedded, cut, etc.

### B. Image pre-processing stage

At the pre-processing stage 310, each of one, more, or all of the set of digital images 335 are pre-processed using one or more techniques to generate a corresponding pre-processed image 340. The pre-processing may comprise cropping the images. In some instances, the pre-processing may further comprise standardization or rescaling (e.g., normalization) to put all features on a same scale (e.g., a same size scale or a same color scale or color saturation scale). In certain instances, the images are resized with a minimum size (width or height) of predetermined pixels (e.g., 2500 pixels) or with a maximum size (width or height) of predetermined pixels (e.g., 3000 pixels) and optionally kept with the original aspect ratio. The pre-processing may further comprise removing noise. For example, the images may be smoothed to remove unwanted noise such as by applying a Gaussian function or Gaussian blur.

The pre-processed images 340 may include one or more training images, validation images, test images, and unlabeled images. It should be appreciated that the pre-processed images 340 corresponding to the training, validation and unlabeled groups need not be accessed at a same time. For example, an initial set of training and validation pre-processed images 340 may first be accessed and used to train a machine learning algorithm 355, and unlabeled input images may be subsequently accessed or received (e.g., at a single or multiple subsequent times) and used by a trained machine learning model 360 to provide desired output (e.g., cell classification).

### C. Labeling stage

In some instances, the machine learning algorithms 355 are trained using supervised training, and some or all of the pre-processed images 340 are partly or fully labeled manually, semi-automatically, or automatically at labeling stage 315 with labels 345 that identify a "correct" interpretation (i.e., the "ground-truth") of various biological material and structures within the pre-processed images 340. For example, the label 345 may identify a feature of interest (for example) a classification of a cell, a binary indication as to whether a given cell is a particular type of cell, a binary indication as to whether the pre-processed image 340 (or a particular region with the pre-processed image 340) includes a particular type of depiction (e.g., necrosis or an artifact), a categorical characterization of a slide-level or region-specific depiction (e.g., that identifies a specific type of cell), a number (e.g., that identifies a quantity of a particular type of cells within a region, a quantity of depicted artifacts, or a quantity of necrosis regions), presence or absence of one or more biomarkers, etc. In some instances, a label 345 includes a location. For example, a label 345 may identify a point location of a nucleus of a cell of a particular type or a point location of a cell of a particular type (e.g., raw dot labels). As another example, a label 345 may include a border or boundary, such as a border of a depicted tumor, blood vessel, necrotic region, etc. As another example, a label 345 may include one or more biomarkers identified based on biomarker patterns observed using one or more stains. For example, a tissue slide stained for a biomarker, e.g., programmed cell death protein 1 ("PD1"), may be observed and/or processed in order to label cells as either positive cells or negative cells in view of expression levels and patterns of PD1 in the tissue. Depending on a feature of interest, a given labeled pre-processed image 340 may be associated with a single label 345 or multiple labels 345. In the latter case, each label 345 may be associated with (for example) an indication as to which position or portion within the pre-processed image 345 the label corresponds.

A label 345 assigned at labeling stage 315 may be identified based on input from a human user (e.g., pathologist or image scientist) and/or an algorithm (e.g., an annotation tool) configured to define a label 345. In some instances, labeling stage 315 can include transmitting and/or presenting part or all of one or more pre-processed images 340 to a computing device operated by the user. In some instances, labeling stage 315 includes availing an interface (e.g., using an API) to be presented by labeling controller 350 at the computing device operated by the user, where the interface includes an input component to accept input that identifies labels 345 for features of interest. For example, a user interface may be provided by the labeling controller 350 that enables selection of an image or region of an image (e.g., FOV) for labeling. A user operating the terminal may select an image or FOV using the user interface. Several image or FOV selection mechanisms may be provided, such as designating known or irregular shapes, or defining an anatomic region of interest (e.g., tumor region). In one example, the image or FOV is a whole-tumor region selected on an IHC slide stained with an H&E stain combination. The image or FOV selection may be performed by a user or by automated image-analysis algorithms, such as tumor region segmentation on an H&E tissue slide, etc. For example, a user may select that the image or FOV as the whole slide or the whole tumor, or the whole slide or whole tumor region may be automatically designated as the image or FOV using a segmentation algorithm. Thereafter, the user operating the terminal may select one or more labels 345 to be applied to the selected image or FOV such as point location on a cell, a positive marker for a biomarker expressed by a cell, a negative biomarker for a biomarker not expressed by a cell, a boundary around a cell, and the like.

In some instances, the interface may identify which and/or a degree to which particular label(s) 345 are being requested, which may be conveyed via (for example) text instructions and/or a visualization to the user. For example, a particular color, size and/or symbol may represent that a label 345 is being requested for a particular depiction (e.g., a particular cell or region or staining pattern) within the image relative to other depictions. If labels 345 corresponding to multiple depictions are to be requested, the interface may concurrently identify each of the depictions or may identify each depiction sequentially (such that provision of a label for one identified depiction triggers an identification of a next depiction for labeling). In some instances, each image is presented until the user has identified a specific number of labels 345 (e.g., of a particular type). For example, a given whole-slide image or a given patch of a whole-slide image may be presented until the user has identified the presence or absence of three different biomarkers, at which point the interface may present an image of a different whole-slide image or different patch (e.g., until a threshold number of images or patches are labeled). Thus, in some instances, the interface is configured to request and/or accept labels 345 for an incomplete subset of features of interest, and the user may determine which of potentially many depictions will be labeled.

In some instances, labeling stage 315 includes labeling controller 350 implementing an annotation algorithm in order to semi-automatically or automatically label various features of an image or a region of interest within the image. The labeling controller 350 annotates the image or FOV on a first slide in accordance with the input from the user or the annotation algorithm and maps the annotations across a remainder of the slides. Several methods for annotation and registration are possible, depending on the defined FOV. For example, a whole tumor region annotated on a H&E slide from among the plurality of serial slides may be selected automatically or by a user on an interface such as VIRTUOSO/VERSO^{™} or similar. Since the other tissue slides correspond to serial sections from the same tissue block, the labeling controller 350 executes an inter-marker registration operation to map and transfer the whole tumor annotations from the H&E slide to each of the remaining IHC slides in a series. Exemplary methods for inter-marker registration are described in further detail in commonly-assigned and international application WO2014140070A2, "Whole slide image registration and cross-image annotation devices, systems and methods", filed March 12, 2014, which is hereby incorporated by reference in its entirety for all purposes. In some embodiments, any other method for image registration and generating whole-tumor annotations may be used. For example, a qualified reader such as a pathologist may annotate a whole-tumor region on any other IHC slide, and execute the labeling controller 350 to map the whole tumor annotations on the other digitized slides. For example, a pathologist (or automatic detection algorithm) may annotate a whole-tumor region on an H&E slide triggering an analysis of all adjacent serial sectioned IHC slides to determine whole-slide tumor scores for the annotated regions on all slides.

In some instances, labeling stage 315 further includes an annotation-processing system 351 implementing an annotation algorithm in order to identify annotation-location and annotation-label conflicts within a set of annotations associated with an image (or an FOV of the image). The annotation-processing system 351 can determine a consensus location for a set of annotations that are positioned in different locations within a region of a training image. In some instances, the annotation-processing system 351 determines that an annotation-location conflict exists for a region in the training image, by determining that two or more annotations from the same annotator are present in the region. The annotation-processing system 351 can resolve the such location conflict by keeping an annotation that has the closest distance to other annotations in the region while discarding other annotations from the same annotators. At the determined consensus location, a consensus label can be determined for the set of annotations that identify different targeted types of biological structures. The consensus labels across different locations can be used to generate ground-truth labels for the image. The ground-truth labels can be used to train, validate, and/or test a machine-learning model configured to predict different types of biological structures in digital pathology images.

### D. Augmentation stage

At augmentation stage 317, training sets of images (original images) that are labeled or unlabeled from the pre-processed images 340 are augmented with synthetic images 352 generated using augmentation control 354 executing one or more augmentation algorithms. Augmentation techniques are used to artificially increase the amount and/or type of training data by adding slightly modified synthetic copies of already existing training data or newly created synthetic data from existing training data. As described herein, inter-scanner and inter-laboratory differences may cause intensity and color variability within the digital images. Further, poor scanning may lead to gradient changes and blur effects, assay staining may create stain artifacts such as background wash, and different tissue/patient samples may have variances in cell size. These variations and perturbations can negatively affect the quality and reliability of deep learning and artificial intelligence networks. The augmentation techniques implemented in augmentation stage 317 act as a regularizer for these variations and perturbations and help reduce overfitting when training a machine learning model. It should be understood that the augmentation techniques described herein can be used as a regularizer for any number and type of variations and perturbations and is not limited to the various specific examples discussed herein.

### E. Training stage

At training stage 320, labels 345 and corresponding pre-processed images 340 can be used by the training controller 365 to train machine learning algorithm(s) 355 in accordance with the various workflows described herein. For example, to train an algorithm 355, the pre-processed images 340 may be split into a subset of images 340a for training (e.g., 90%) and a subset of images 340b for validation (e.g., 10%). The splitting may be performed randomly (e.g., a 90/10% or 70/30%) or the splitting may be performed in accordance with a more complex validation technique such as K-Fold Cross-Validation, Leave-one-out Cross-Validation, Leave-one-group-out Cross-Validation, Nested Cross-Validation, or the like to minimize sampling bias and overfitting. The splitting may also be performed based on the inclusion of augmented or synthetic images 352 within the pre-processed images 340. For example, it may be beneficial to limit the number or ratio of synthetic images 352 included within the subset of images 340a for training. In some instances, the ratio of original images 335 to synthetic images 352 is maintained at 1:1, 1:2, 2:1, 1:3, 3:1, 1:4, or 4:1.

In some instances, the machine learning algorithm 355 includes a CNN, a modified CNN with encoding layers substituted by a residual neural network ("Resnet"), or a modified CNN with encoding and decoding layers substituted by a Resnet. In other instances, the machine learning algorithm 355 can be any suitable machine learning algorithm configured to localize, classify, and or analyze pre-processed images 340, such as a two-dimensional CNN ("2DCNN"), a Mask R-CNN, a U-Net, Feature Pyramid Network (FPN), a dynamic time warping ("DTW") technique, a hidden Markov model ("HMM"), pure attention-based model, etc., or combinations of one or more of such techniques-e.g., vision transformer, CNN-HMM or MCNN (Multi-Scale Convolutional Neural Network). The computing environment 300 may employ the same type of machine learning algorithm or different types of machine learning algorithms trained to detect and classify different cells. For example, computing environment 300 can include a first machine learning algorithm (e.g., a U-Net) for detecting and classifying PD1. The computing environment 500 can also include a second machine learning algorithm (e.g., a 2DCNN) for detecting and classifying Cluster of Differentiation 68 ("CD68"). The computing environment 300 can also include a third machine learning algorithm (e.g., a U-Net) for combinational detecting and classifying PD1 and CD68. The computing environment 300 can also include a fourth machine learning algorithm (e.g., a HMM) for diagnosis of disease for treatment or a prognosis for a subject such as a patient. Still other types of machine learning algorithms may be implemented in other examples according to this disclosure.

The training process for the machine learning algorithm 355 includes selecting hyperparameters for the machine learning algorithm 355 from the parameter data store 363, inputting the subset of images 340a (e.g., labels 345 and corresponding pre-processed images 340) into the machine learning algorithm 355, and performing iterative operations to learn a set of parameters (e.g., one or more coefficients and/or weights) for the machine learning algorithms 355. The hyperparameters are settings that can be tuned or optimized to control the behavior of the machine learning algorithm 355. Most algorithms explicitly define hyperparameters that control different aspects of the algorithms such as memory or cost of execution. However, additional hyperparameters may be defined to adapt an algorithm to a specific scenario. For example, the hyperparameters may include the number of hidden units of an algorithm, the learning rate of an algorithm (e.g., 1e-4), the convolution kernel width, or the number of kernels for an algorithm. In some instances, the number of model parameters are reduced per convolutional and deconvolutional layer and/or the number of kernels are reduced per convolutional and deconvolutional layer by one half as compared to typical CNNs.

The subset of images 340a may be input into the machine learning algorithm 355 as batches with a predetermined size. The batch size limits the number of images to be shown to the machine learning algorithm 355 before a parameter update can be performed. Alternatively, the subset of images 340a may be input into the machine learning algorithm 355 as a time series or sequentially. In either event, in the instance that augmented or synthetic images 352 are included within the pre-processed images 340a, the number of original images 335 versus the number of synthetic images 352 included within each batch or the manner in which original images 335 and the28henotypec images 352 are fed into the algorithm (e.g., every other batch or image is an original batch of images or original image) can be defined as a hyperparameter.

Each parameter is a tunable variable, such that a value for the parameter is adjusted during training. For example, a cost function or objective function may be configured to optimize accurate classification of depicted representations, optimize characterization of a given type of feature (e.g., characterizing a shape, size, uniformity, etc.), optimize detection of a given type of feature, and/or optimize accurate localization of a given type of feature. Each iteration can involve learning a set of parameters for the machine learning algorithms 355 that minimizes or maximizes a cost function for the machine learning algorithms 355 so that the value of the cost function using the set of parameters is smaller or larger than the value of the cost function using another set of parameters in a previous iteration. The cost function can be constructed to measure the difference between the outputs predicted using the machine learning algorithms 355 and the labels 345 contained in the training data. For example, for a supervised learning-based model, the goal of the training is to learn a function "h( )" (also sometimes referred to as the hypothesis function) that maps the training input space X to the target value space Y, h: X→Y, such that h(x) is a good predictor for the corresponding value of y. Various different techniques may be used to learn this hypothesis function. In some techniques, as part of deriving the hypothesis function, the cost or loss function may be defined that measures the difference between the ground truth value for an input and the predicted value for that input. As part of training, techniques such as back propagation, random feedback, Direct Feedback Alignment (DFA), Indirect Feedback Alignment (IFA), Hebbian learning, and the like are used to minimize this cost or loss function.

The training iterations continue until a stopping condition is satisfied. The training-completion condition may be configured to be satisfied when (for example) a predefined number of training iterations have been completed, a statistic generated based on testing or validation exceeds a predetermined threshold (e.g., a classification accuracy threshold), a statistic generated based on confidence metrics (e.g., an average or median confidence metric or a percentage of confidence metrics that are above a particular value) exceeds a predefined confidence threshold, and/or a user device that had been engaged in training review closes a training application executed by the training controller 365. Once a set of model parameters are identified via the training, the machine learning algorithms 355 has been trained and the training controller 365 performs the additional processes of testing or validation using the subset of images 340b (testing or validation data set). The validation process may include iterative operations of inputting images from the subset of images 340b into the machine learning algorithm 355 using a validation technique such as K-Fold Cross-Validation, Leave-one-out Cross-Validation, Leave-one-group-out Cross-Validation, Nested Cross-Validation, or the like to tune the hyperparameters and ultimately find the optimal set of hyperparameters. Once the optimal set of hyperparameters are obtained, a reserved test set of images from the subset of images 340b are input the machine learning algorithm 355 to obtain output, and the output is evaluated versus ground truth using correlation techniques such as Bland-Altman method and the Spearman's rank correlation coefficients and calculating performance metrics such as the error, accuracy, precision, recall, receiver operating characteristic curve (ROC), etc. In some instances, new training iterations may be initiated in response to receiving a corresponding request from a user device or a triggering condition (e.g., initial model development, model update/adaptation, continuous learning, drift is determined within a trained machine learning model 360, and the like).

As should be understood, other training/validation mechanisms are contemplated and may be implemented within the computing environment 300. For example, the machine learning algorithm 355 may be trained and hyperparameters may be tuned on images from the subset of images 340a and the images from the subset of images 340b may only be used for testing and evaluating performance of the machine learning algorithm 355. Moreover, although the training mechanisms described herein focus on training a new machine learning algorithm 355. These training mechanisms can also be utilized for initial model development, model update/adaptation, and continuous learning of existing machine learning models 360 trained from other datasets, as described in detail herein. For example, in some instances, machine learning models 360 might have been preconditioned using images of other objects or biological structures or from sections from other subjects or studies (e.g., human trials or murine experiments). In those cases, the machine learning models 360 can be used for initial model development, model update/adaptation, and continuous learning using the pre-processed images 340.

### F. Result-generation stage

The trained machine learning model 360 can then be used (at result generation stage 325) to process new pre-processed images 340 to generate predictions or inferences such as predict cell centers and/or location probabilities, classify cell types, generate cell masks (e.g., pixel-wise segmentation masks of the image), predict a diagnosis of disease or a prognosis for a subject such as a patient, or a combination thereof. In some instances, the masks identify a location of depicted cells associated with one or more biomarkers. For example, given a tissue stained for a single biomarker the trained machine learning model 360 may be configured to: (i) infer centers and/or locations of cells, (ii) classify cells based on features of a staining pattern associated with the biomarker, and (iii) output a cell detection mask for the positive cells and a cell detection mask for the negative cells. By way of a another example, given a tissue stained for two biomarkers the trained machine learning model 360 may be configured to: (i) infer centers and/or locations of cells, (ii) classify cells based on features of staining patterns associated with the two biomarkers, and (iii) output a cell detection mask for cells positive for the first biomarker, a cell detection mask for cells negative for the first biomarker, a cell detection mask for cells positive for the second biomarker, and a cell detection mask for cells negative for the second biomarker. By way of another example, given a tissue stained for a single biomarker the trained machine learning model 360 may be configured to: (i) infer centers and/or locations of cells, (ii) classify cells based on features of cells and a staining pattern associated with the biomarker, and (iii) output a cell detection mask for the positive cells and a cell detection mask for the negative cells code, and a mask cells classified as tissue cells.

In some instances, an analysis controller 380 generates analysis results 385 that are availed to an entity that requested processing of an underlying image. The analysis result(s) 385 may include the masks output from the trained machine learning models 360 overlaid on the new pre-processed images 340. Additionally, or alternatively, the analysis results 385 may include information calculated or determined from the output of the trained machine learning models such as whole-slide tumor scores. In exemplary embodiments, the automated analysis of tissue slides use the assignee VENTANA's FDA-cleared 510(k) approved algorithms. Alternatively, or in addition, any other automated algorithms may be used to analyze selected regions of images (e.g., masked images) and generate scores. In some embodiments, the analysis controller 380 may further respond to instructions of a pathologist, physician, investigator (e.g., associated with a clinical trial), subject, medical professional, etc. received from a computing device. In some instances, a communication from the computing device includes an identifier of each of a set of particular subjects, in correspondence with a request to perform an iteration of analysis for each subject represented in the set. The computing device can further perform analysis based on the output(s) of the machine learning model and/or the analysis controller 380 and/or provide a recommended diagnosis/treatment for the subject(s).

It will be appreciated that the computing environment 300 is exemplary, and the computing environment 300 with different stages and/or using different components are contemplated. For example, in some instances, a network may omit pre-processing stage 310, such that the images used to train an algorithm and/or an image processed by a model are raw images (e.g., from image data store). As another example, it will be appreciated that each of pre-processing stage 310 and training stage 320 can include a controller to perform one or more actions described herein. Similarly, while labeling stage 315 is depicted in association with labeling controller 350 and while result generation stage 325 is depicted in association with analysis controller 380, a controller associated with each stage may further or alternatively facilitate other actions described herein other than generation of labels and/or generation of analysis results. As yet another example, the depiction of computing environment 300 shown in FIG. 3 lacks a depicted representation of a device associated with a programmer (e.g., that selected an architecture for machine learning algorithm 355, defined how various interfaces would function, etc.), a device associated with a user providing initial labels or label review (e.g., at labeling stage 315), and a device associated with a user requesting model processing of a given image (which may be a same user or a different user as one who had provided initial labels or label reviews). Despite the lack of the depiction of these devices, computing environment 300 may involve the use one, more or all of the devices and may, in fact, involve the use of multiple devices associated with corresponding multiple users providing initial labels or label review and/or multiple devices associated with corresponding multiple users requesting model processing of various images.

### V. GENERATING SYNTHETIC SINGLEPLEX IMAGES FROM A DUPLEX IMAGE

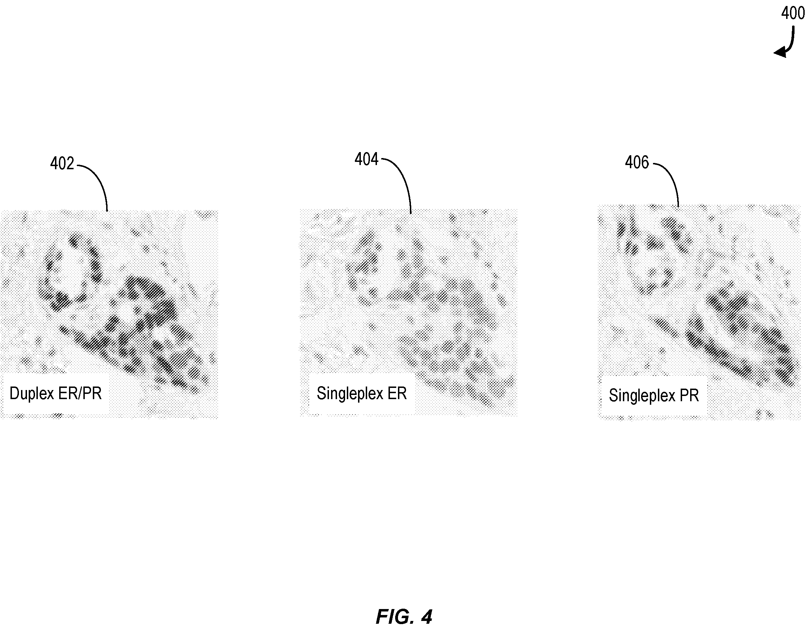

FIG. 4 shows an example of duplex ER/PR and adjacent singleplex IHC ER/PR images 400, according to some embodiments. The duplex and singleplex images 400 can be obtained using the process performed by the network 200 of FIG. 2. In FIG. 4, a duplex ER/PR image 402 is stained for both estrogen and progesterone receptors, a singleplex ER image 404 can be stained for estrogen receptor only, and a singleplex PR image 406 can be stained for progesterone receptor only. Duplex IHC staining of tissue sections allows simultaneous detection of two or more biomarkers. The duplex IHC staining further allows co-expression of both biomarkers at the single-cell level. The duplex IHC staining does not require two IHC stains and additional registration to identify co-localization of biomarkers. Despite these advantages, biomarkers in duplex IHC images can be often difficult to be discerned by pathologists, since the biomarkers often overlap each other and are clustered. In effect, the manual scoring process of duplex IHC images can be challenging. In the example images 400 of FIG. 4, Tamra (purple) was used to dye PR, Quinone Methide Dabsyl (yellow) was used to dye ER, and Hematoxylin (blue) was used as a counterstain.

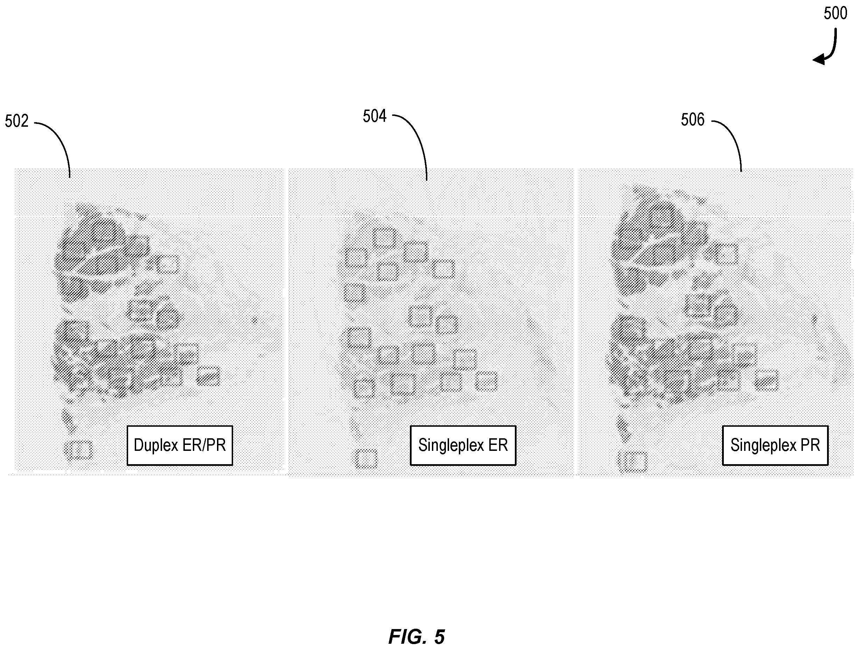

FIG. 5 shows fields of view (FOVs) 500 selected on a duplex ER/PR image and registered on singleplex IHC ER and IHC PR images, according to some embodiments. In FIG. 5, the FOVs are selected on duplex ER/PR image 502, then the FOVs are registered and overlaid on the singleplex IHC ER image 504 and singleplex IHC PR image 506. In some embodiments, the FOVs are selected by one or more pathologists and are directly presented on the duplex ER/PR image 502. An automatic registration algorithm can be utilized to register duplex ER/PR image 502 on singleplex IHC ER and PR images 504 and 506.

The duplex image can be unmixed to generate synthetic singleplex images, in which each synthetic singleplex image can depict cells stained for a single biomarker (e.g., ER). In some instances, each duplex image is processed to yield three monochrome images, in which two monochrome images correspond to each of the two stains (e.g., ER, PR) and a third monochrome image corresponds to a counterstain (e.g., hematoxylin). Each single-stained image can be combined with the counterstain ("CS") image to produce the synthetic singleplex images. Each of the synthetic singleplex images can be processed using one or more machine-learning models to predict a phenotype of each cell, in which the phenotype can be associated with a corresponding type of biomarker. Other types of image pre-processing can be applied to generate and modify the synthetic singleplex images, in which the other types of image pre-processing are described in the pre-processing stage 310 of FIG. 3. In some instances, the synthetic singleplex images can be annotated or reviewed reliably by pathologists to generate a set of training images.

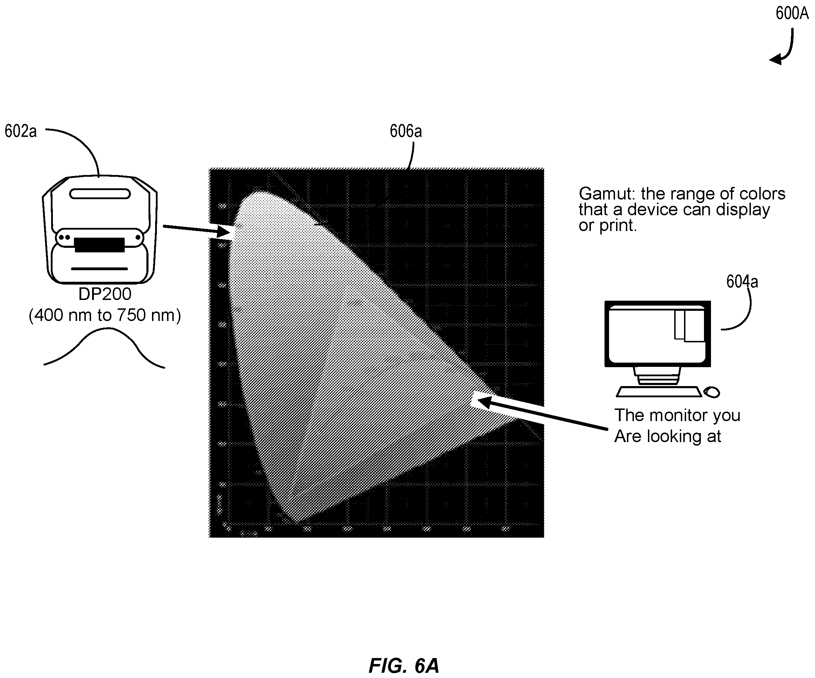

Additionally or alternatively, the synthetic singleplex images can be processed using color correction methods to reduce a range of colors being displayed on a display device. FIGS. 6A-C show example techniques for generating synthetic singleplex images, according to some embodiments. In FIG. 6A, raw images scanned by a slide-scanning device 602a (e.g., DP200 scanner) are typically not directly displayed to pathologists for scoring, as a display device 604a-due to its limited color range-may not be able to display all possible colors that were captured by the slide-scanning device. Thus, a color correction operation 606a can be performed on the raw image. The color correction 606a can used such that the depicted color space falls within the color range of the display device 604a. The corrected images can then be displayed on the display device 604a. The color corrected images can include colors that are similar to the colors that can be viewed under microscopes. In some instances, color de-convolution techniques are used to perform the color correction operation 606a.

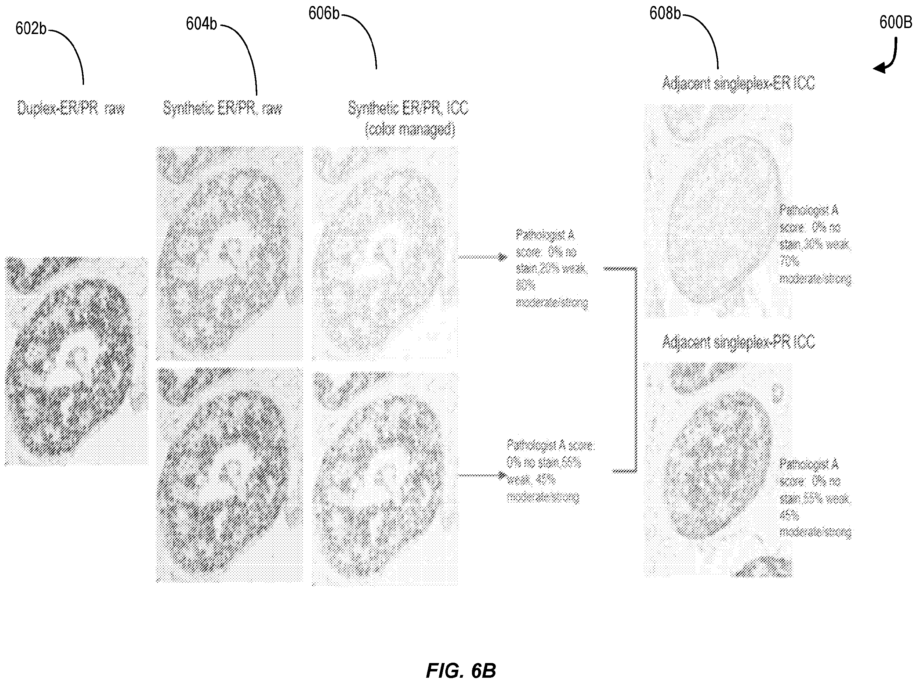

FIG. 6B shows a schematic diagram that illustrates a process 600B for generating synthetic Dabsyl ER image and a synthetic PR image from a duplex ER/PR image, according to some embodiments. In FIG. 6B, the duplex ER/PR image 602b can be unmixed to generate raw synthetic singleplex images 604b, in which the raw synthetic singleplex images 604b include the synthetic ER image and the synthetic PR image. Each of the raw synthetic singleplex images 604b can be processed using color correction operation to generate color-normalized synthetic singleplex images 606b. In some instances, the synthetic ER/PR images 606b are provided to pathologists for scoring, and the scores may be compared with registered singleplex ER/PR images 608b to determine presence of any system/color un-mixing or staining errors. To enable the accurate comparison between the synthetic images and the single-stained images (e.g., avoid tissue gap during registration), a specific slide cutting sequence can be used. For example, a cutting sequence of "H&E, singleplex ER, Duplex ER/PR, singleplex PR" can be used to reduce tissue gap during the registration process.

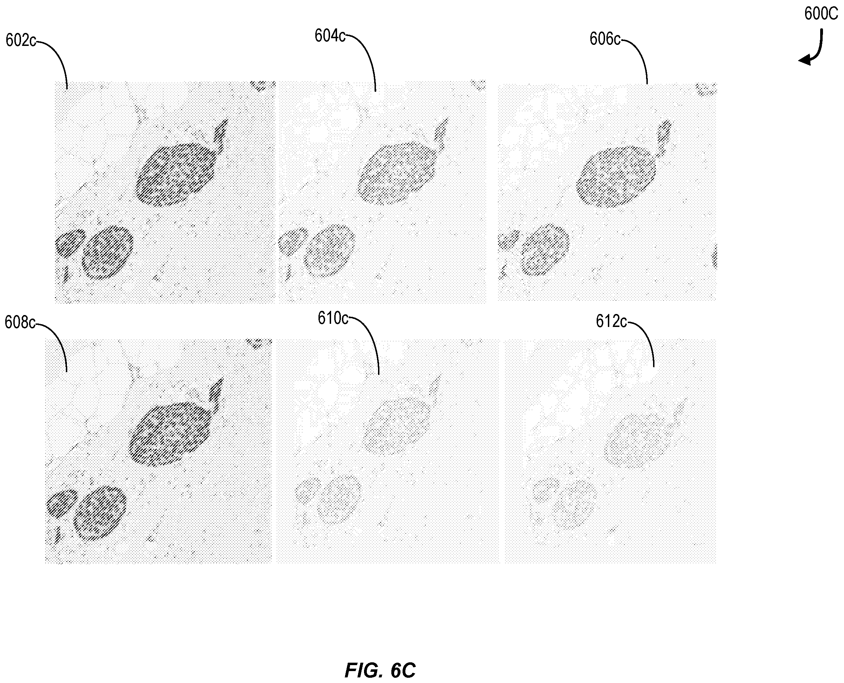

FIG. 6C shows an example set of color-corrected synthetic singleplex images 600C generated from duplex images, according to some embodiments. A first row of images include processing an example duplex image stained with ER/PR 602c to generate a color-corrected synthetic image that depicts a presence of PR biomarkers 604c. As shown in FIG. 6C, the color-corrected synthetic image depict similar biomarker patterns as those of a singleplex PR image that depicts an adjacent tissue section 606c. Similarly, a second row of images include processing another example duplex image stained with ER/PR 608c to generate another color-corrected synthetic image that depicts a presence of ER biomarkers 610c. As shown in FIG. 6C, the color-corrected synthetic image depict similar biomarker patterns as those of a singleplex ER image that depicts an adjacent tissue section 612c.

### VI. TRAINING MACHINE-LEARNING MODELS FOR DETECTING PHENOTYPES IN DUPLEX IMAGES

To train the machine-learning models, the image-processing system can generate training data including a set of training images. The training images can be labeled with ground truth labels, including ER+, PR+, ER-, PR+, and others (e.g., stroma cell, immune cell, artifacts). In some instances, the image-processing system implements a training process that includes: (i) pathologists selecting one or more field of views (FOVs) in duplex images; (ii) registering the FOVs to adjacent singleplex images, based on selected FOV from the duplex images; (iii) extracting FOVs from both duplex ER/PR and singleplex ER and PR; (iv) generating synthetic Tamra PR/ synthetic Dabsyl ER images from duplex images, thereby generating 4 images for each FOV; (v) pathologists scoring all FOVs including the synthetic singleplex images; and (vi) training an ER-specific machine-learning model and a PR-specific machine-learning model using the scores.

### A. Training data

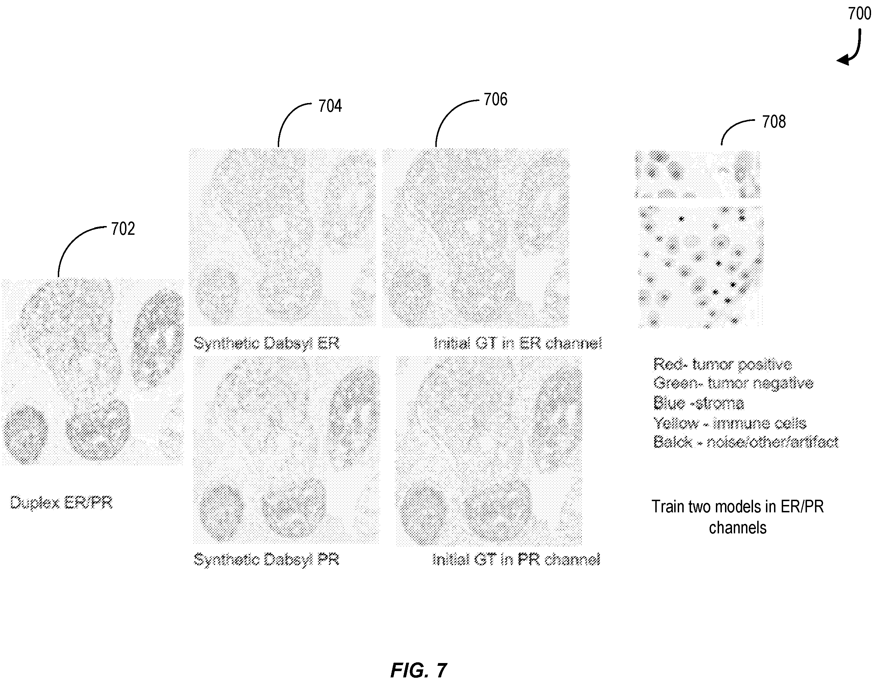

FIG. 7 shows an example set of training images 700 for training machine-learning models to detect cell phenotypes in synthetic singleplex images, according to some embodiments. The training images can be generated from a duplex image 702 that depicts at least part of a biological sample (e.g., a tissue section) and stained with two or more biomarkers (e.g., ER, PR). The duplex image 702 can be unmixed into synthetic singleplex images 704. Each of the synthetic singleplex images 704 can represent the at least part of the biological sample stained with a single corresponding biomarker. In some instances, the synthetic singleplex images 704 are compared with ground-truth singleplex images 706 to remove any staining errors. The ground-truth singleplex images 706 can correspond to singleplex images that represent adjacent tissue sections of the tissue section of the duplex image 702. To compare the synthetic singleplex images 704 with the ground-truth singleplex images 706, a registration operation can be performed to align the ground-truth singleplex images 706 and the synthetic singleplex images 704 to a single coordinate system.

Once the staining errors are removed, a training image 708 can be generated by adding one or more training labels to the synthetic singleplex images 704. The training image 708 can thus correspond to a synthetic singleplex image comprising a plurality of training labels. Each training label of the plurality of training labels can include: (i) a location of a cell identified by the training label; and (ii) a phenotype of the cell for the corresponding biomarker. For example, a red color of the training label indicates a "tumor positive" cancer cell, a green color of the training label indicates a "tumor negative" non-cancer cell, a blue color of the training label indicates a stroma cell, a yellow color of the training label indicates an immune cell, a black color of the training label indicates an artifact. The above steps can be repeated to generate the set of training images for training the respective machine-learning models.

### B. Model selection

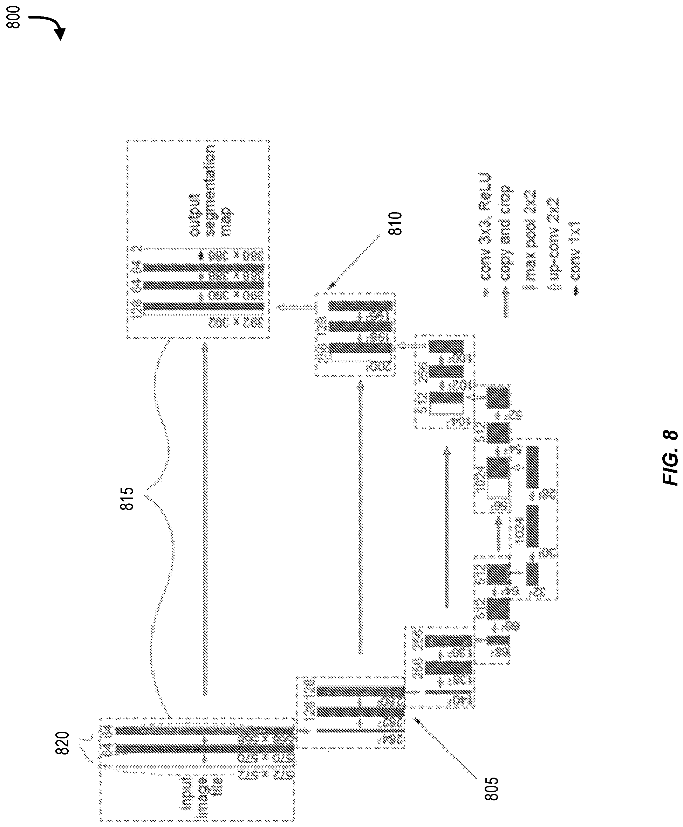

FIG. 8 shows an example architecture of a machine-learning model used for detecting phenotypes in duplex slide iamges, according to some embodiments. As shown in FIG. 8, a U-Net 800 may include a contracting path 805 and an expansive path 810, which gives it a u-shaped architecture. The contracting path 805 is a CNN network that includes repeated application of convolutions (e.g., 3x3 convolutions (unpadded convolutions)), each followed by a rectified linear unit (ReLU) and a max pooling operation (e.g., a 2x2 ma))pooling with stride 2) for downsampling. At each downsampling step or pooling operation, the number of feature channels may be doubled. During the contraction, the spatial information of the image data is reduced while feature information is increased. The expansive path 810 is a CNN network that combines the feature and spatial information from the contracting path 805 (upsampling of the feature map from the contracting path 805). The upsampling of the feature map is followed by a sequence of up-convolutions (upsampling operators) that halves the number of channels, concatenations with a correspondingly cropped feature map from the contracting path 805, repeated application of convolutions (e.g., two 3x3 convolutions) that are each followed by a rectified linear unit (ReLU), and a final convolution (e.g., one 1x1 convolution) to generate the two-dimensional tumor masks. In order to localize, the high-resolution features from the contracting path 805 are combined with the upsampled output from the expansive path 810. The U-Net 800 uses the valid part of each convolution without any fully connected layers, i.e., the segmentation map only contains the pixels for which the full context is available in the input image, and uses skip connections that link the context features learned during a contracting block and the localization features learned in an expansion block.

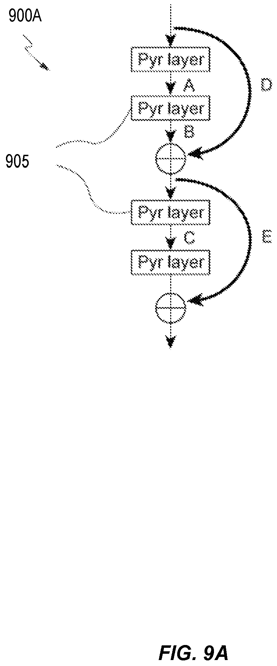

In conventional U-Net architecture, convolutional blocks are composed of convolutional layers (e.g., typically two or three layers) for performing the convolutions. However, in accordance with various embodiments, the convolutional blocks and convolutional layers are replaced with residual blocks 815 with separable convolutions performed in pyramidal layers 820 (a single convolutional layer may be replaced with two or more pyramidal layers 820) at one or more levels of dilation. (e.g., stacked filtered images). FIG. 9A illustrates the layer structure of one of the residual blocks 815 illustrated in FIG. 8. As shown, a residual block 900 may comprise multiple pyramidal layers 905. In a network (e.g., a ResNet) comprising residual blocks 900, each pyramidal layer 905 feeds into the next layer (A,B, C..) and directly into the layers about 2-3 layers away (D, E...). The use of residual blocks 900 in the network helps to overcome a degradation problem that occurs from increasing the number of pyramidal layers (if the number of layers keeps increasing) accuracy will increase at first but will start to saturate at one point and eventually degrade). The residual blocks 900 skip some of these additional pyramidal layers using the skip-connections or residual connections, which ultimately propagates larger gradients to initial pyramidal layers. Skipping effectively simplifies the network, using fewer pyramidal layers in the initial training stages. This speeds learning by reducing the impact of vanishing gradients, as there are fewer layers to propagate through (i.e., multi-speed residual learning). The network then gradually restores the skipped layers as it learns the feature space.

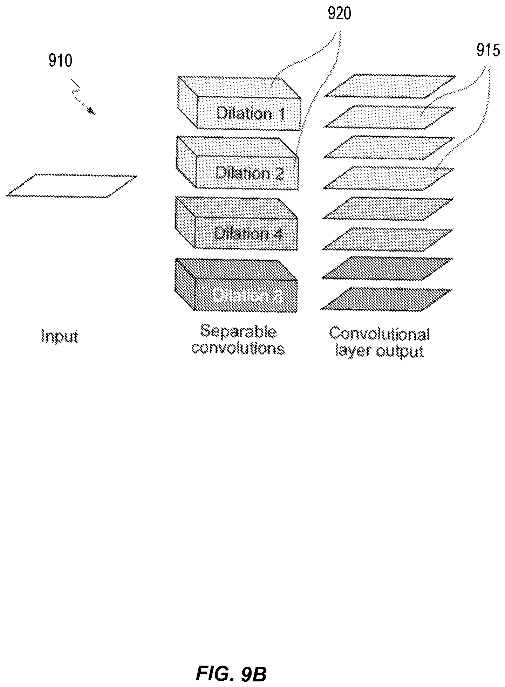

FIG. 9B illustrates a single pyramidal layer 910 of FIG. 9A, in accordance with various embodiments. As shown in FIG. 9B, the pyramidal layer 910 may use dilated (atrous) separable convolutions at multiple different scales ('dilation blocks'), in this example four levels. The pyramidal layer 910 comprises the same image at the multiple different scales in order to increase accuracy in detecting objects (e.g., a tumor). A dilated (atrous) convolution refers to a filter with a "spread out" receptive field, which increases the size of the receptive field relative to the kernel size. In some embodiments, the one or more levels of dilation is four levels of dilation. In other embodiments, greater or fewer levels of dilation could be used, for example, six levels of dilation. The convolutional layer output 915 are output of the dilation blocks 920 (here labeled as Dilations 1, 2, 4, and 8). The illustrated example of FIG. 9B assumes four dilation blocks and that each dilation block outputs two channels (of the same color), so the total number of channels output is eight. The number of channels output by each dilation block may vary depending on the residual block in question. The example of FIG. 9B illustrates the top left or top right residual block 815 in FIG. 8. In some embodiments, the number of each of the channels output by each dilation block 915 in the pyramidal layer 910 of a residual block 905 is equal to the k number of filters on the residual block 905 divided by four.

Empirical evidence shows that the residual blocks allow a gain of accuracy and an easier optimization. Separable convolutions, depthwise convolutions followed by pointwise convolutions, have also shown a large gain in convergence speed and a significant reduction of the model size. Dilated convolutions expand the receptive field without loss of resolution allowing hence to aggregate multi-scale contextual information down sampling. The redesign of the convolutional blocks allows for extracting very localized and rare information in the image.

### C. Methods for training machine-learning models to detect phenotypes in duplex images

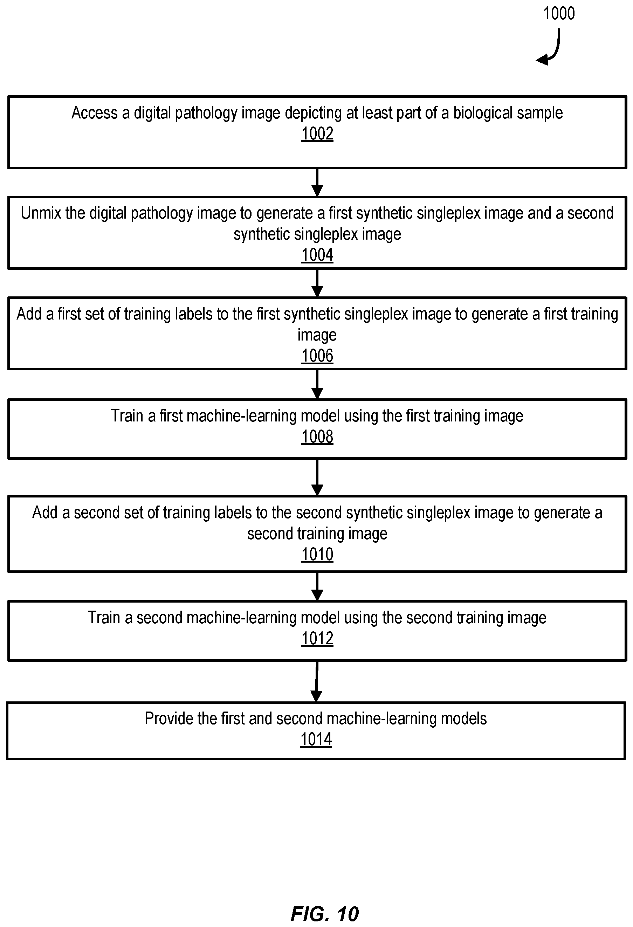

FIG. 10 illustrates a process 1000 for training machine-learning models to detect phenotypes in duplex images, in accordance with some embodiments. For illustrative purposes, the process 1000 is described with reference to the image-processing system 100 of FIG. 1 and/or the components illustrated in FIG. 3, though other implementations are possible. For example, the program code for the computing environment 300 of FIG. 3, which is stored in a non-transitory computer-readable medium, is executed by one or more processing devices to cause a server system to perform one or more operations described herein.

At step 1002, an training subsystem accesses a digital pathology image depicting at least part of a biological sample (e.g., a tissue section). The digital pathology image can be a duplex image that is stained for a first type of biomarker and a second type of biomarker. In some instances, the digital pathology image corresponds to a portion (e.g., an image tile) of a larger digital image.

At step 1004, the training subsystem unmixes the digital pathology image to generate: (i) a first synthetic singleplex image depicting the at least part of the biological sample for which the first type of biomarker is identified; and (ii) a second synthetic singleplex image depicting the at least part of the biological sample from which the second type of biomarker is identified. In some instances, a synthetic singleplex image is generated by: (i) generating a pre-processed image depicting cells stained for a corresponding biomarker; and (ii) combining the pre-processed image with a counterstain image. The use of the counterstain image can allow the biomarker to be visually distinguished from other cell structures depicted in the pre-processed image.

In addition, the first type of biomarker can correspond to an ER biomarker, and the second type of biomarker corresponds to a PR biomarker. Additionally or alternatively, the first and second synthetic singleplex images can be further processed using color-correction operation to facilitate addition of training labels. In some instances, the first and second synthetic singleplex images are compared with respective singleplex images that depict another part of the biological sample (e.g., adjacent tissue sections) to address any possible errors such as staining errors.

At step 1006, the training subsystem adds a first set of training labels to the first synthetic singleplex image to generate a first training image. Each training label can identify a location of a cell identified by the training label and a phenotype of the cell for the corresponding biomarker. For example, the first set of training labels can include: (i) an ER+ classification; (ii) an ER-classification; (iii) a stromal cell classification; (iv) an immune cell classification; and (v) an artifact classification. In some instances, the training labels are added to the first synthetic singleplex image by one or more pathologists.

At step 1008, the training subsystem trains a first machine-learning model using the first training image. Continuing with the above example, the first machine-learning model can be trained to predict cell phenotypes in images stained for the ER biomarker, which includes adjusting parameters of the first machine-learning model based on a loss calculated between an output of the first machine-learning model and the ground truth corresponding to the first synthetic singleplex image. The first machine-learning model can be trained to generate a set of probability maps for the first training image. Each probability map of the set of probability maps can represent a plurality of pixels of the synthetic singleplex image and correspond to a particular classification of the set of classifications. For example, the first machine-learning model can be trained to generate a first set of probability maps for the first training image, in which the first set of probability maps includes: (i) a first probability map for ER+ classification; (ii) a second probability map for ER-classification; (iii) a third probability map for stromal cell classification; (iv) a fourth probability map for immune cell classification; and (v) a fifth probability map for artifact classification. In some instances, the first machine-learning model is a U-Net model.

At step 1010, the training subsystem adds a second set of training labels to the second synthetic singleplex image to generate a second training image. Each training label can identify a location of a cell identified by the training label and a phenotype of the cell for the corresponding biomarker. For example, the first set of training labels can include: (i) a PR+ classification; (ii) a PR- classification; (iii) a stromal cell classification; (iv) an immune cell classification; and (v) an artifact classification. In some instances, the training labels are added to the second synthetic singleplex image by one or more pathologists.

At step 1012, the training subsystem trains a second machine-learning model using the second training image. Continuing with the above example, the second machine-learning model can be trained to predict cell phenotypes in images stained for the PR biomarker, which includes adjusting parameters of the second machine-learning model based on a loss calculated between an output of the second machine-learning model and the ground truth that corresponds to the second synthetic singleplex image. The second machine-learning model can be trained to generate a set of probability maps for the second training image. For example, the first machine-learning model can be trained to generate a first set of probability maps for the first training image, in which the first set of probability maps includes: (i) a first probability map for PR+ classification; (ii) a second probability map for PR- classification; (iii) a third probability map for stromal cell classification; (iv) a fourth probability map for immune cell classification; and (v) a fifth probability map for artifact classification. In some instances, the second machine-learning model is a U-Net model. The first and second machine-learning models can thus be trained using separate training images, such that the trained machine-learning models can accurately predict phenotypes of cells depicted in the respective synthetic singleplex images.

At step 1014, the training subsystem provide the first and second machine-learning models. For example, the first and second machine-learning models can be accessed by another computing system (e.g., the image-processing system 100 of FIG. 1) over a communication network to predict cell phenotypes in other duplex images. In some instances, the first and second machine-learning models are accessed by the other system, once the loss determined for each of the first and second machine-learning models are below a predetermined threshold value. Process 1000 terminates thereafter.

### VII. MERGING CELL PHENOTYPES FOR MULTIPLE BIOMARKERS

The trained two machine-learning models can be used to generate the initial seed locations and predict phenotypes for the seed locations. In particular, a first machine-learning model (e.g., an ER model) can be used to generate cell phenotypes in synthetic singleplex ER images, and a second machine-learning model (e.g., a PR model) can be used to generate cell phenotypes in synthetic singleplex PR images.

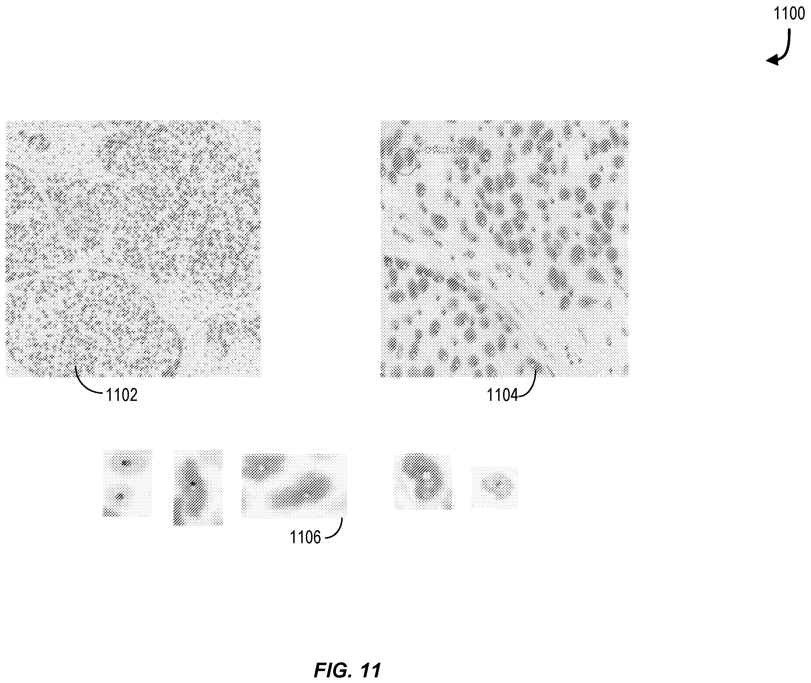

FIGS. 11 shows example seed locations and different class labels generated by two models, according to some embodiments. In FIG. 11, an image 1102 identifies red "diamonds" generated by the ER model, in which the ER model detected 1762 cells (including ER+, ER-, immune, matrix, and background). The first image 1102 also identifies green "X" generated by the PR model, in which the PR model detected 1034 cells. A magnified portion 1104 of the image further shows that there are cells of the duplex image that are challenging to identify a phenotype. The difficulty can be attributed to multiple green and red marks clustered in the same image. Different regions 1106 of the duplex image depict examples of cells for which identifying a phenotype for multiple biomarkers can be challenging. For example, a cell can be predicted by the ER model to be ER-positive cell, but the PR model can predict the same cell as corresponding to other cells such as immune and stromal cells.

### A. Generating probability maps from synthetic singleplex images using trained machine-learning models

To address the challenges described above, the image-processing system can merge the phenotypes generated by the first and second machine-learning models. The merging of phenotypes can be performed by using probability maps. In particular, probability maps generated by the machine-learning models can be compared for a given image region, and an output can be determined for the given region based on the probability maps. The use of probability maps provide an advantage over existing techniques such as tuning the heuristic parameters to assign classes.

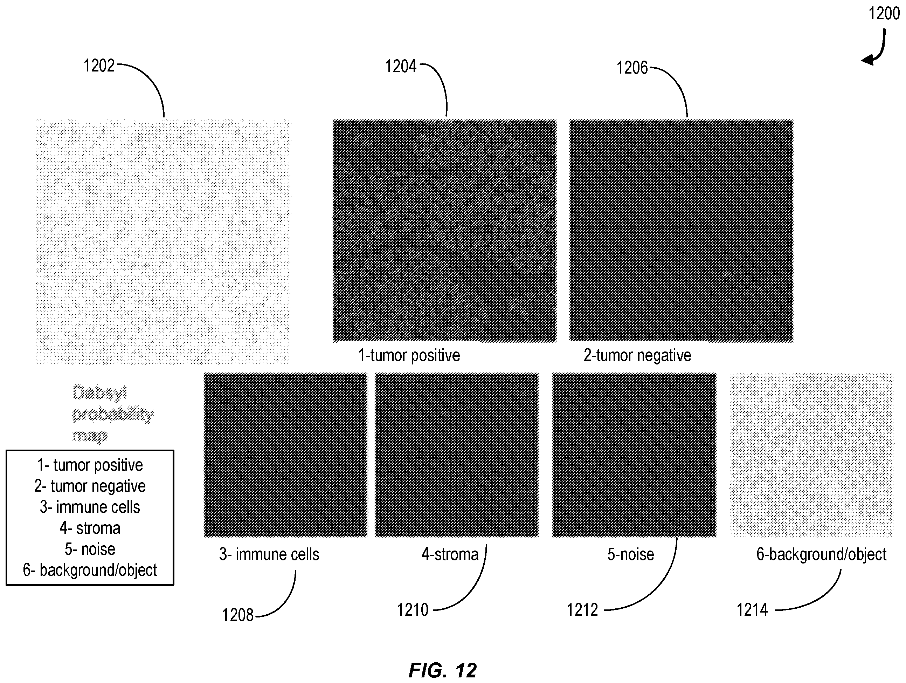

FIG. 12 illustrates five probability maps 1200 generated by an ER model, according to some embodiments. Each probability map of the probability maps 1200 can represent a plurality of pixels of the synthetic ER image and correspond to a particular classification of the set of classifications. For each pixel of the plurality of pixels, the probability map includes a probability value that indicates whether the pixel corresponds to the classification. As shown in FIG. 12, the probability maps 1200 representing a synthetic ER image can include: (i) a first probability map 1204 for ER+ classification; (ii) a second probability map 1206 for ER- classification; (iii) a third probability map 1208 for immune cell classification; (iv) a fourth probability map 1210 for stromal cell classification; and (v) a fifth probability map 1212 for artifact/noise classification. In addition to the probability maps, the ER model can also generate a background/object map 1214. For each pixel in the ER channel, the image-processing system can compare the probability values between the five probability maps to determine whether the pixel should be assigned as ER-positive, ER-negative, immune cell, stromal cell, or other cell. The PR model can also generate five probability maps by processing the synthetic PR image. The probability maps generated by the PR model can be used to determine that the pixel will become PR-positive, PR-negative, immune cell, stromal cell, or other cell.

### B. Generating merged probability maps to define a set of anchor points

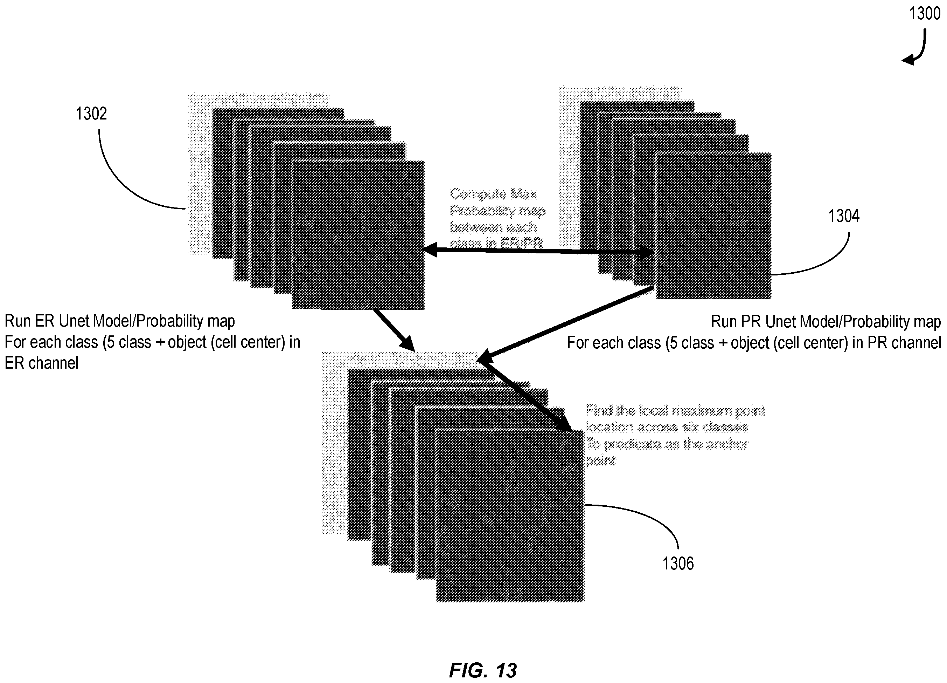

The probability maps generated by each of the ER and PR models can be merged to generate a merged set of probability maps. Based on the merged set of probability maps, a set of anchor points can be determined. The set of anchor points can correspond to locations within the duplex image at which presence of one or more biomarkers can be identified. FIG. 13 illustrates computation of five merged probability maps 1300 between probability maps generated by two U-Net models in ER and PR channels, according to some embodiments. In FIG. 13, an ER model can be used on the synthetic ER image and can generate an object map and five probability maps 1302 of ER tumor positive, ER tumor negative, immune cell, stromal cell and other cells. A PR model can be used on the synthetic PR image and can generate an object map and five probability maps 1302 of PR tumor positive, PR tumor negative, immune cell, stromal cell and other cells. The image-processing system can compare both probability maps 1302 and 1304 and determine the maximum probability of each pixel in the ER and PR tumor-positive probability maps. The image-processing system can also determine the maximum probability of each pixel in the ER and PR tumor-negative probability maps. The image-processing system can continue to perform the above process to immune, stromal, and other cellular probability maps between ER and PR channels.

After computing five merged probability maps 1306 from the ER and PR channel images, the image-processing system can compare the maximum probability of each pixel in the merged probability maps 1306 within the certain distance or area, and the pixel having the maximum probability can be predicted as the potential center of each cell or an anchor point of each cell.

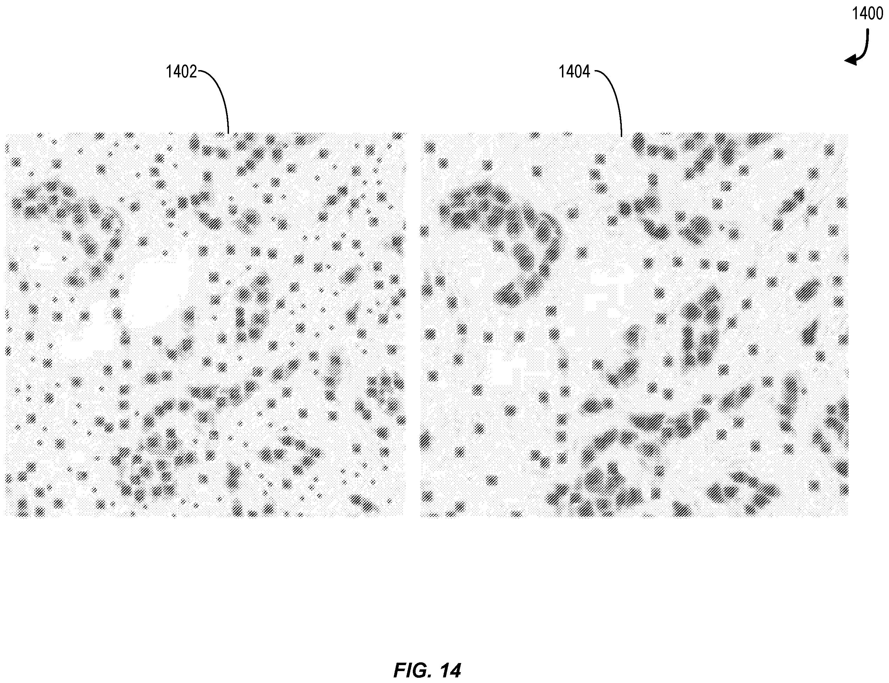

FIG. 14 illustrates examples of anchor points 1400 obtained by searching the merged probability maps between the ER and PR channels, according to some embodiments. In FIG. 14, the anchor points 1400 are overlaid on each of the synthetic PR image 1402 and the synthetic ER image 1404. The blue squares in the images 1402 and 1404 identify the anchor points, and the red diamonds correspond to the cells originally detected in the Tamra PR image 1402 and the Dabsyl ER image 1404. the anchor point is the center of each cell, and all the red dots combine five types of labels in the ER/PR channel. In some embodiments, the anchor point corresponds to another portion of the cell (e.g., the nucleus).

### C. Associating an anchor point with a corresponding phenotype

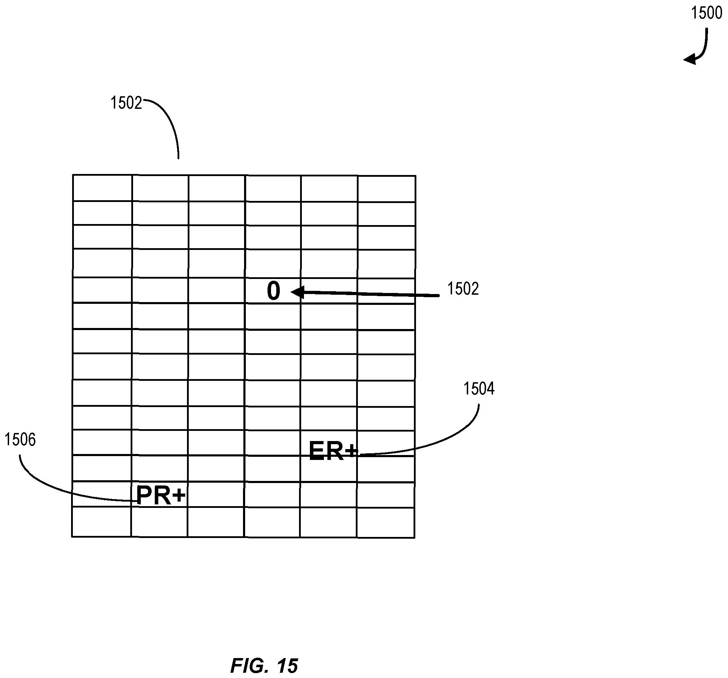

FIG. 15 illustrates an example anchor point at the pixel level and surrounding ER+ and PR+ points, according to some embodiments. In FIG. 15, an example anchor point 1502 at the pixel level and surrounding ER+ point 1504 and PR+ point 1506 is depicted. In some embodiments, a k-nearest neighbor algorithm or a distance algorithm is applied to calculate the distance between the anchor point and ER+, PR+ points 1504 and 1506. For example, if both ER+ and PR+ locations are within a predetermined distance from the anchor point, the anchor point can be assigned with both ER+ and PR+ labels.

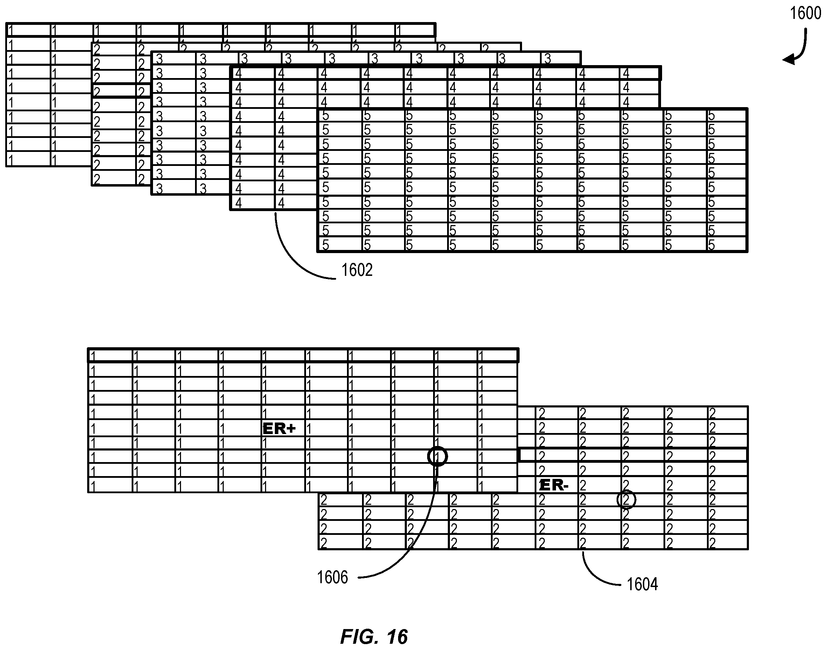

Additionally or alternatively, a labeling technique can be used. FIG. 16 illustrates example label graphs 1600 determined from the probability maps, according to some embodiments. FIG. 16 further illustrates the logical AND computations being applied to the five label graphs and anchor points. For each point in the five probability maps in the ER channel (ER+"1", ER-"2", stroma-"3", immune "4" and other "5"), the image-processing system can calculate the surrounding label graphs 1602. In some instances, a label graph can correspond to a 10 x 10 pixel area surrounding a point classified as showing a phenotype (e.g., ER+) for a corresponding type of biomarker. In label graphs 1604, the anchor points can also marked as "red" circles, at which the logical "&" operation and five label graphs are used to determine whether the anchor point belongs to one of ER+/ER-/Immune/Stroma/Other classification. For example, an anchor point 1606 can be assigned to an ER+ classification, as the anchor point is within the 10 x 10 pixel area corresponding to the point classified as ER+ classification. Although another ER-label graph overlaps with the ER+ label graph, the image-processing system can assign a higher weight to the ER+ label graph, such that the anchor point can assigned with the ER+ classification over other classifications.

### i. Associating anchor points with ER classifications

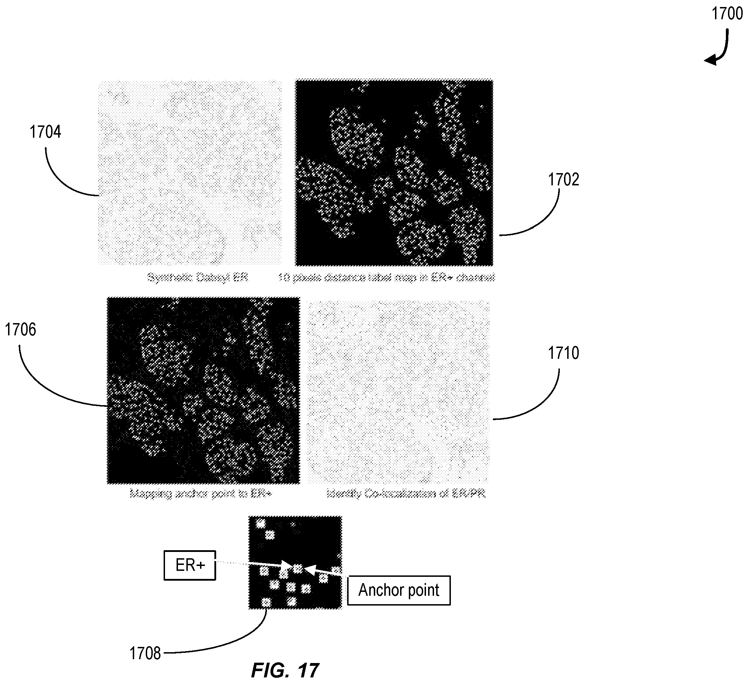

FIG. 17 illustrates an example of assigning anchor point into ER+/ER-/other, according to some embodiments. In FIG. 17, the image-processing system generates a pixel-distance map 1702 for a synthetic singleplex image 1704 (e.g., ER-channel image). The pixel-distance map 1702 includes a set of points classified as having a phenotype for the corresponding type of biomarker, in which each point of the set of points is defined by a predetermined pixel area (e.g., 10 x 10 pixels). The image-processing system can overlay the pixel-distance map 1702 to a set of anchor points corresponding the synthetic singleplex image 1704, thereby generating a mapped image 1706 that includes classifications for the set of anchor points. A magnified portion 1708 of the mapped image 1706 is shown, in which one or more anchor points (defined as "red" dots) are associated with the corresponding pixel areas (defined as "white" squares). The mapped image 1706 can be combined with another mapped image (not shown) generated for the synthetic PR image to generate an output image 1710 that includes co-localization of ER and PR biomarkers. The above techniques can be advantageous over other existing algorithms, since the above technique can perform faster, more efficiently, and more accurately.

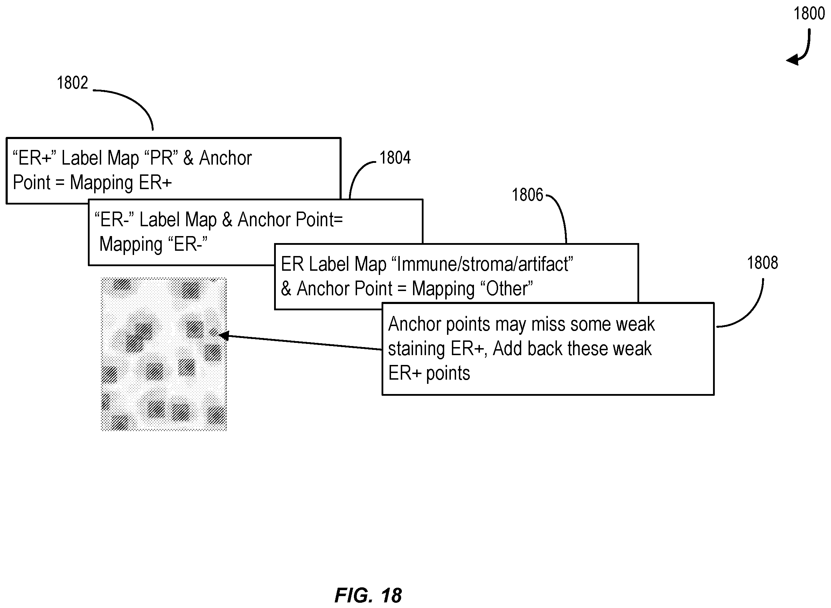

FIG. 18 illustrates a process 1800 for assigning anchor points to ER+/ER-/other in a synthetic ER image, according to some embodiments. In FIG. 18, the process 1800 includes a process of using the "&" operator to assign anchor points with classification labels (e.g., ER+/ER-/other) in the ER channel, in which: (i) a portion of an "ER+" label map overlapping with an anchor point would generate an ER+ classification for the anchor pint (block 1802); (ii) a portion of an "ER-" label map overlapping with an anchor point would generate an ER- classification for the anchor pint (block 1804); and (iii) a portion of an "immune/stroma/artifact" label map overlapping with an anchor point would generate an "Other" classification for the anchor pint (block 1806). In some instances, when the image-processing system calculates the maximum probabilities of classifications for the pixels of the synthetic singleplex images, weakly stained ER positive cells may not be considered and missed. To address the above issue, the image-processing system can add the weakly stained ER positive cells in this step (block 1808).

### ii. Associating anchor points with PR classifications

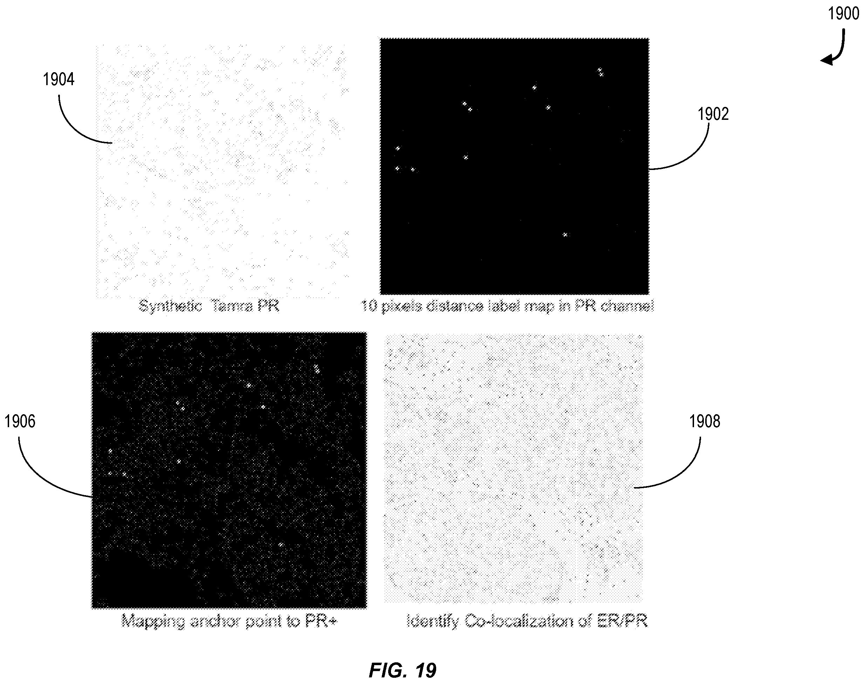

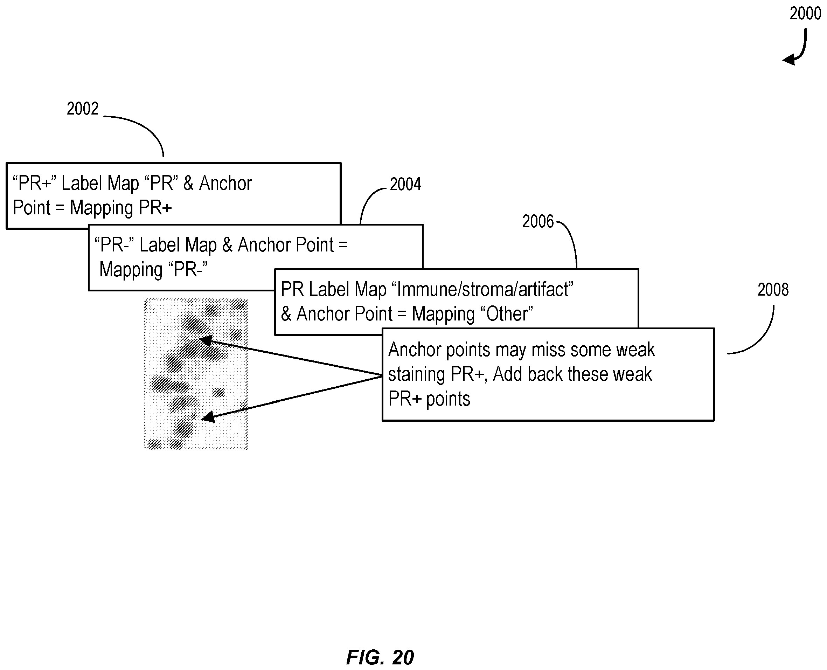

Similarly, the image-processing system can repeat the equivalent process in the synthetic PR image shown in FIGS. 19 and 20. FIG. 19 illustrates an example of assigning anchor point into PR+/PR-/other, according to some embodiments. In FIG. 19, the image-processing system generates a pixel-distance map 1902 for a synthetic singleplex image 1904 (e.g., PR-channel image). The pixel-distance map 1902 includes a set of points classified as having a phenotype for the PR biomarker, in which each point of the set of points is defined by a predetermined pixel area (e.g., 10 x 10 pixels). The image-processing system can overlay the pixel-distance map 1902 to a set of anchor points corresponding the synthetic singleplex image 1904, thereby generating a mapped image 1906 that includes classifications for the set of anchor points. The mapped image 1906 can be combined with the mapped image 1806 generated for the synthetic ER image to generate an output image 1910 that includes co-localization of ER and PR biomarkers.

FIG. 20 illustrates a process 2000 for assigning anchor points to PR+/PR-/other in a synthetic PR image, according to some embodiments. In FIG. 20, the process 2000 includes a process of using the "&" operator to assign anchor points with classification labels (e.g., PR+/PR-/other) in the PR channel, in which: (i) a portion of an "PR+" label map overlapping with an anchor point would generate an PR+ classification for the anchor pint (block 2002); (ii) a portion of an "PR-" label map overlapping with an anchor point would generate an PR- classification for the anchor pint (block 2004); and (iii) a portion of an "immune/stroma/artifact" label map overlapping with an anchor point would generate an "Other" classification for the anchor pint (block 2006). In some instances, when the image-processing system calculates the maximum probabilities of classifications for the pixels of the synthetic singleplex images, weakly stained PR positive cells may not be considered and missed. To address the above issue, the image-processing system can add the weakly stained PR positive cells in this step (block 2008).

### D. Merging phenotypes into a duplex image

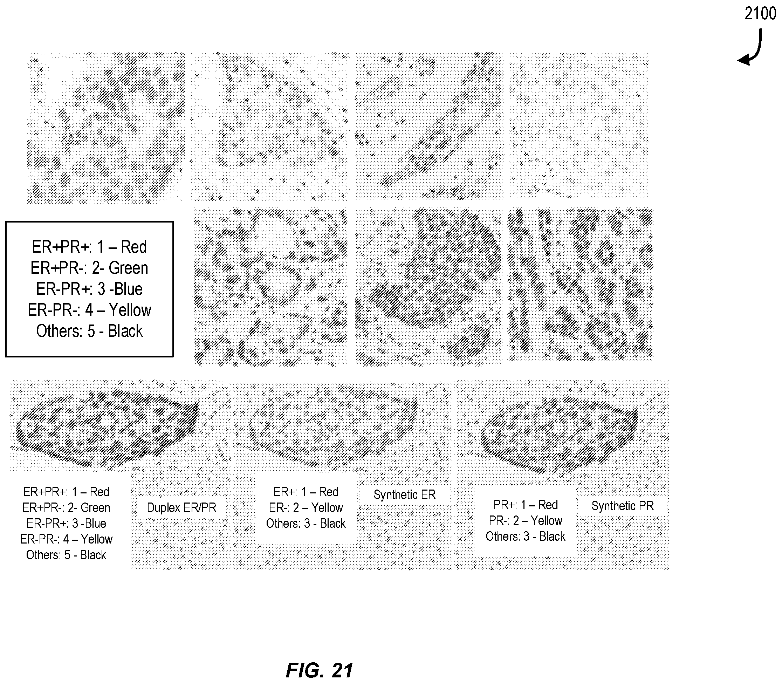

In some embodiments, the system is configured to combine and merge ER+/PR+/ER-/PR-/other for all different types of anchor points. The classifications can be determined according to the different priority probabilities on the synthetic ER and PR images. For example, the ER+/PR+/ER-/PR- in the synthetic ER and PR images can be assigned with equal weights, at which the image-processing system can combine the above phenotypes detected in the two synthetic ER and PR images. For other cells detected in the synthetic ER and PR images, a smaller weight can be assigned. For example, if a pixel is detected as ER+ in the ER channel and PR+ is detected in the PR channel, the image-processing system can identify the equal weights and assign the pixel as ER+PR+ co-expression phenotype. In another example, if a pixel is detected as ER+ in the ER channel and a stromal cell is detected in the PR channel, then the image-processing system can identify the two different weights and assign the pixel as ER+ classification only. FIG. 21 shows a set of example images depicting merged phenotypes that are overlaid in the duplex images, in some embodiments.

### E. Methods for using machine-learning techniques to detect phenotypes in a duplex image

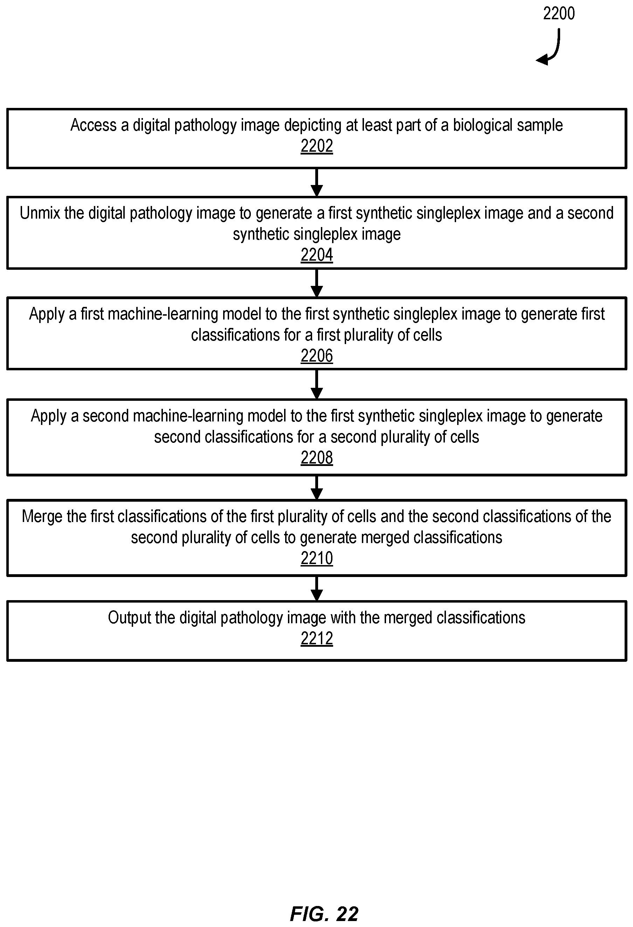

FIG. 22 illustrates a process 2200 for using trained machine-learning models to detect phenotypes in duplex images, in accordance with some embodiments. For illustrative purposes, the process 2200 is described with reference to the image-processing system 100 of FIG. 1 and/or the components illustrated in FIG. 3, though other implementations are possible. For example, the program code for the computing environment 300 of FIG. 3, which is stored in a non-transitory computer-readable medium, is executed by one or more processing devices to cause a server system to perform one or more operations described herein.

At step 2202, an image-processing system accesses a digital pathology image depicting at least part of a biological sample (e.g., a tissue section). The digital pathology image can be a duplex image that is stained for a first type of biomarker and a second type of biomarker. In some instances, the digital pathology image corresponds to a portion (e.g., an image tile) of a larger digital image.

At step 2204, the image-processing system unmixes the digital pathology image to generate: (i) a first synthetic singleplex image depicting the at least part of the biological sample for which the first type of biomarker is identified; and (ii) a second synthetic singleplex image depicting the at least part of the biological sample from which the second type of biomarker is identified. In some instances, the first type of biomarker corresponds to an ER biomarker, and the second type of biomarker corresponds to a PR biomarker. In some instances, the synthetic singleplex image is generated by: (i) generating a pre-processed image depicting cells stained for a corresponding biomarker; and (ii) combining the pre-processed image with a counterstain image. The use of the counterstain image can allow the biomarker to be visually distinguished from other cell structures depicted in the pre-processed image.

At step 2206, the image-processing system applies a first machine-learning model to the first synthetic singleplex image to: (i) detect a first plurality of cells from the first synthetic singleplex image; and (ii) determine, for each cell of the first plurality of cells, a classification of a first set of classifications. The first machine-learning model can be a first trained U-Net model. The classification of the first set indicates whether the cell includes a biomarker having the first biomarker type. The first machine-learning model can be an ER model trained using the process 1000 of FIG. 10. The first set of classifications can identify a phenotype of the cell for the ER biomarker, in which the first set of classifications include: (i) an ER-positive classification (ER+); (ii) an ER-negative classification biomarker (ER-); (iii) a stroma-cell classification; (iv) an immune-cell classification; and (v) an artifact or other biological structure classification. In some instances, the image-processing system applies the first machine-learning model to generate a first set of probability maps that represent the first synthetic singleplex image. Each probability map of the first set of probability maps can represent a plurality of pixels of the first synthetic singleplex image and correspond to a particular classification of the first set of classifications. For each pixel of the plurality of pixels, the probability map includes a probability value that indicates whether the pixel corresponds to the classification.

At step 2208, the image-processing system applies a second machine-learning model to the second synthetic singleplex image to: (i) detect a second plurality of cells from the second synthetic singleplex image; and (ii) determine, for each cell of the second plurality of cells, a classification of a second set of classifications. The second machine-learning model can be a second trained U-Net model, which is separately trained from the first trained U-Net model used to generate the first set of classifications. The classification of the second set indicates whether the cell includes a biomarker having the second biomarker type. The second machine-learning model can be a PR model trained using the process 1000 of FIG. 10. The second set of classifications can identify a phenotype of the cell for the PR biomarker, in which the second set of classifications include: (i) a PR-positive classification (PR+); (ii) a PR-negative classification biomarker (PR-); (iii) a stroma-cell classification; (iv) an immune-cell classification; and (v) an artifact or other biological structure classification. In some instances, the image-processing system applies the second machine-learning model to generate a second set of probability maps that represent the second synthetic singleplex image. Each probability map of the second set of probability maps can represent a plurality of pixels of the second synthetic singleplex image and correspond to a particular classification of the second set of classifications. For each pixel of the plurality of pixels, the probability map includes a probability value that indicates whether the pixel corresponds to the classification. The first set of classifications can include classifications that are different from those of the second set of classifications.

At step 2210, the image-processing system merges the classifications of the first plurality of cells and the classifications of the second plurality of cells to generate merged classifications. The merging of the first and second sets of classifications facilitates identification of image regions of the digital pathology image that depict cells associated with multiple-biomarker phenotypes (e.g., ER/PR). In some instances, the image-processing system merges the first and second sets of classifications by merging the first and second sets of probability maps to define a set of anchor points. The set of anchor points correspond to locations within the digital pathology image, at which presence of one or more biomarkers can be identified for each anchor point. To merge the classifications, the image-processing system assigns, for each anchor point of the set of anchor points, a corresponding classification of the first set of classifications and a corresponding classification of the second set of classifications. The corresponding classifications of the first and second sets can be identified based on a determination of whether the anchor point is within a predetermined distance (e.g., 10 pixels) from a location of each of the corresponding classifications.

At step 2212, the image-processing system outputs the digital pathology image with the merged classifications. A merged classification can identify a phenotype for a detected cell, in which the phenotype can indicate a presence of multiple biomarkers that were stained for the digital pathology image. In some instances, the image-processing system outputs the digital pathology image by overlaying the merged classifications onto the digital pathology image.

### VII. TRAINING OF AN ENHANCED MACHINE-LEARNING MODEL USING MERGED PHENOTYPES

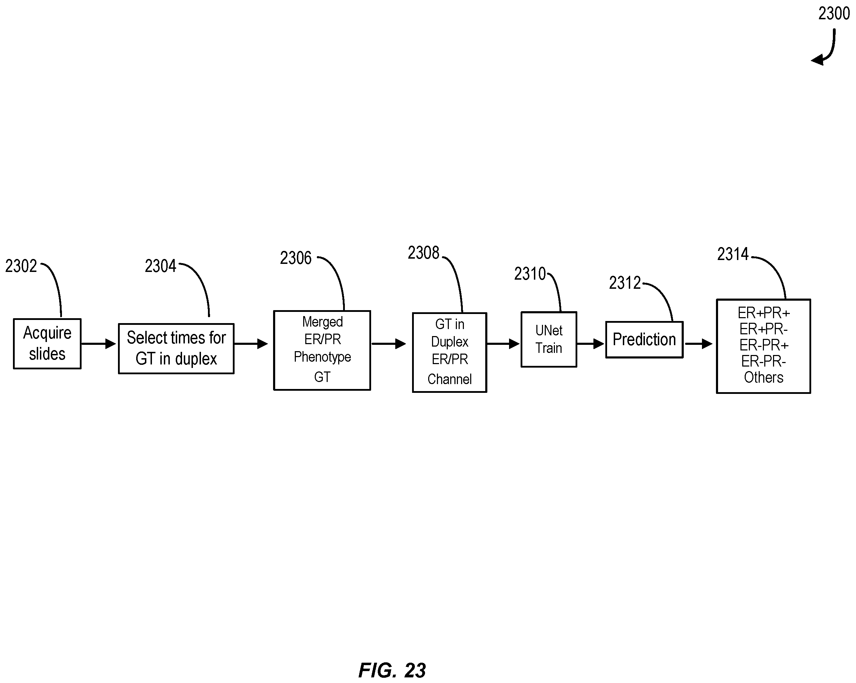

In some instances, the merged phenotypes can be used to train another machine-learning model to predict cell phenotypes in duplex images (referred to as an "enhanced machine-learning model"), in which the enhanced machine-learning model does not require unmixing of the duplex image. FIG. 23 illustrates the training pipeline 2300 using the merged phenotype for duplex ER/PR algorithm, according to some embodiments.

In FIG. 23, an image-processing system can be configured to receive an image of a pathology slide that has been stained to show two or more types of biomarkers (block 2302). In some embodiments, the image-processing system is configured to operate using images of duplex slides that have been stained to show the presence of estrogen receptor (ER) and progesterone receptor (PR) proteins. Each cell in the image can be classified as being positive or negative for each of the ER and PR markers. Thus, a phenotype of each cell can be identified as ER+PR+, ER+PR-, ER-PR+, ER-PR-, or other (e.g., stroma, immune, necrosis, artifacts, etc.).

In some instances, the image-processing system divides the duplex slide image into a plurality of image tiles (block 2304). The identification of cell phenotypes for the multiple biomarkers can be performed for each of the plurality of image tiles. In some instances, a set of image tiles are selected from the plurality of image tiles, in which the set of image tiles are used as training images for training one or more machine-learning models to detect cell phenotypes for types of biomarkers.

The image-processing system can identify merged phenotypes of the duplex image to generate a training duplex image (block 2306). The training duplex image can include a set of training labels, in which each training label identifies a phenotype of a corresponding cell for multiple biomarkers (e.g., ER+/PR+). The merged phenotypes for the training image can be generated using the steps of process 2200 described in FIG. 22. In some instances, the image-processing system identifies the merged phenotypes for each image tile of the set of image tiles to generate a set of training images for training a machine-learning model. In some instances, the merged phenotypes for the set of training images are compared with ground-truth training labels manually generated by pathologists (block 2308).

In some embodiments, the image-processing system uses the set of image tiles with the merged phenotypes (i.e., training images) to train the enhanced machine-learning model (e.g., a U-Net model), such that the enhanced machine-learning model can predict phenotypes of each detected cell for multiple biomarkers. For example, the enhanced machine-learning model can be trained using the set of training images to predict cell phenotypes for both ER/PR biomarkers (block 2310).

The trained enhanced machine-learning model can then be used to detect cell phenotypes in corresponding other duplex images (block 2312). As a result, the image-processing system can use a single enhanced machine-learning model to predict phenotypes for multiple biomarkers (block 2314). In some instances, the image-processing system overlays the merged phenotypes onto the duplex image. The training of the enhanced machine-learning model using merged phenotypes can increase accuracy of detecting multiple biomarkers in a duplex image without performing image pre-processing steps such as color unmixing operations.

### VIII. EXPERIMENTAL RESULTS

Performance of the present machine-learning techniques are comparable or better than manual annotations performed by pathologists, thereby demonstrating increased accuracy of image-processing system in identifying presence of multiple biomarkers in duplex images.

### A. Comparison of consensus scores

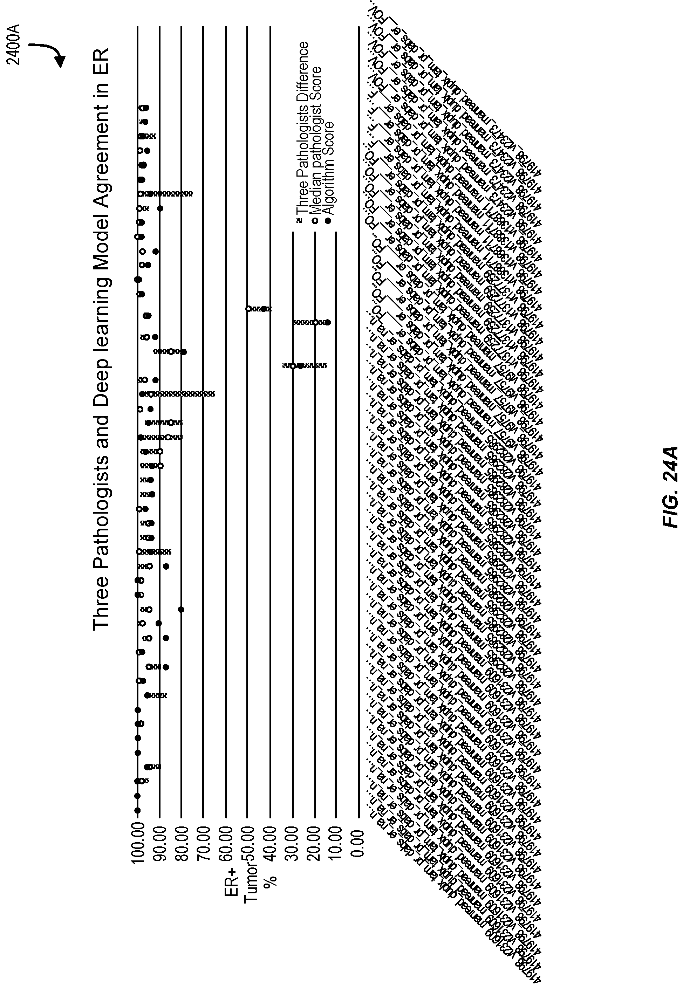

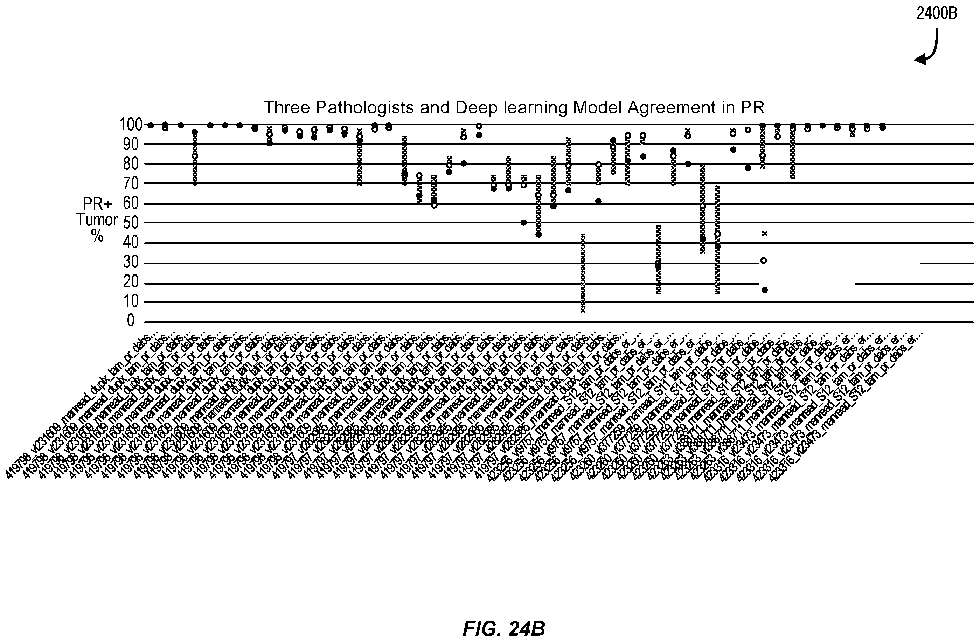

FIGS. 24A-B illustrate the consensus scores of three pathologists and the U-Net and merge phenotype algorithm, according to some embodiments. FIG. 24A shows consensus scores (e.g., mean scores) of three pathologists for ER biomarker being compared with scores corresponding to the merged phenotypes predicted by machine-learning techniques described in aspects of the present disclosure. In addition, FIG. 24B shows consensus scores of three pathologists for PR biomarker being compared with scores corresponding to the merged phenotypes predicted by the present machine-learning techniques. As shown in FIGS. 24A-B, the merge phenotypes generated by the machine-learning techniques (green dots) was within the score range of the three pathologists (red bar) and very close to the consensus score (yellow dot). The graphs in FIGS. 24A-Bthus demonstrate that the present machine-learning techniques can perform as well as manually annotations performed by the pathologists.

Table 1 further descibes the correlation between the "merge phenotype + U-Net" algorithm and the patholgists' scores with the consensus agreement (median score of three patholgoists).

**Table 1**

| **ER Score Correlation** | **Pathologist A** | **Pathologist B** | **Pathologist C** | **Merge Phenotype +UNET Algorithm** |
|---|---|---|---|---|
| Consensus Median | 0.9339 | 0.9799 | 0.9811 | 0.9633 |

| **PR Score Correlation** | **Pathologist A** | **Pathologist B** | **Pathologist C** | **Merge Phenotype +UNET Algorithm** |
|---|---|---|---|---|
| Consensus Median | 0.9094 | 0.9494 | 0.9356 | 0.9391 |

U-Net Table 1 shows that the U-Net algorithm and merging of phenotypes perform as well as pathologists in detecting ER and PR biomarkers.

### B. Accuracy assessment of an enhanced machine-learning model

In another assessment, pathologists selected 50 FOVs from six slides with a range of diversity and intensity of ER and PR biomarkers. The designed merge phenotype to train a single U-Net model in the duplex image, to detect the co-expression ER+PR+, ER+PR-,ER-PR+, ER-PR-, and other cells. The enhanced U-Net model can be trained using the steps described in the process 2300 of FIG. 23. In addition, the following configurations were used to train the enhanced U-Net model: (i) optimizer included the Adam Optimizer; (ii) the learning rate was set as 1e-4; (iii) epochs were set as 100/200; (iv) training/validation was set of 80/20; (v) patch size was set to 256X256; and (vi) a cross entropy function was set as the loss function. Table 2 provides the training dataset used to train the U-Net model. The accuracy results of the trained U-Net model are listed in Table 3.

**Table 2: The dataset used for duplex ER/PR training and validation**

| **class/label** | **Cell Type** | **No. of cells** |
|---|---|---|
| 1 | ER+ | 50867 |
| 2 | ER- | 3631 |
| 3 | PR+ | 47055 |
| 4 | PR- | 7443 |
| 5 | Other | 92456 |

**Table 3: The accuracy for ER/PR model**

| | **Accuracy - Epochs 100** | **Accuracy** - **Epochs 200** |
|---|---|---|
| Random Split 1 | 94% | 94% |
| Random Split 2 | 91% | 91% |
| Random Split 3 | **95%** | **96%** |
| Random Split 4 | 93% | 93% |

### C. Qualitative results

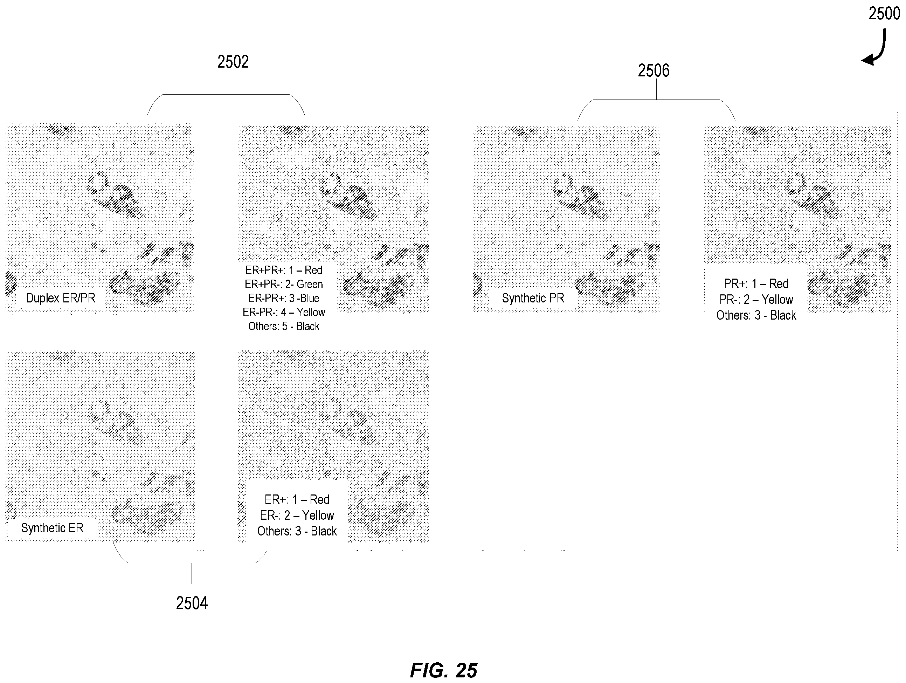

In addition to quantitative results, qualitative data were also generated to assess performance of the machine-learning models. FIG. 25 illustrates examples of the phenotype detection of results duplex ER/PR, according to some embodiments. FIG. 25 shows examples of the phenotype detection of results duplex ER/PR, including merged phenotypes overlaid over the ER/PR duplex image 2502, merged phenotypes overlaid over the synthetic ER image 2504, and merged phenotypes overlaid over the synthetic PR image 2506.

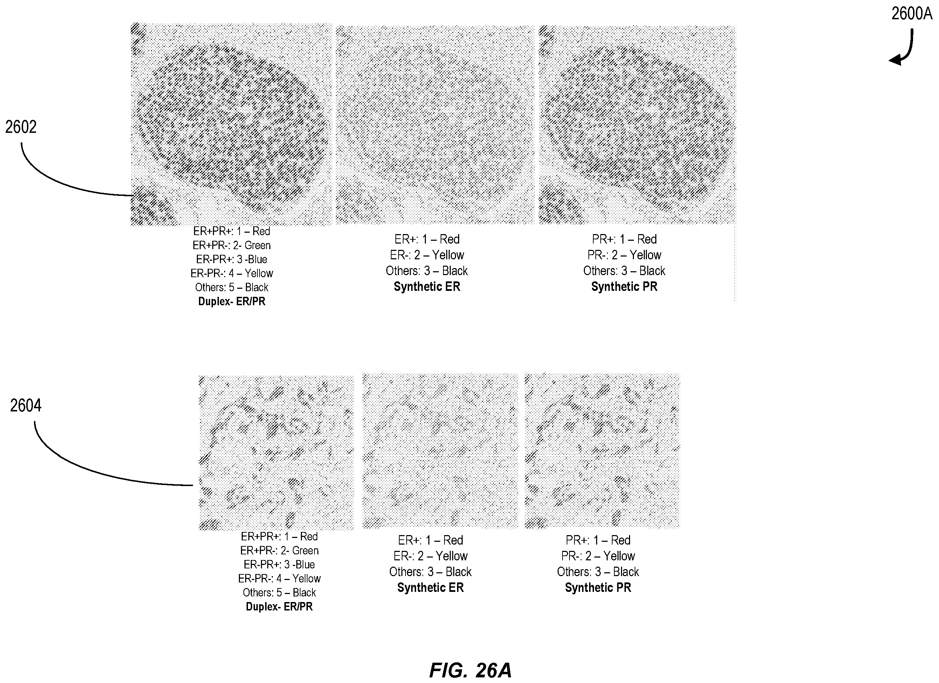

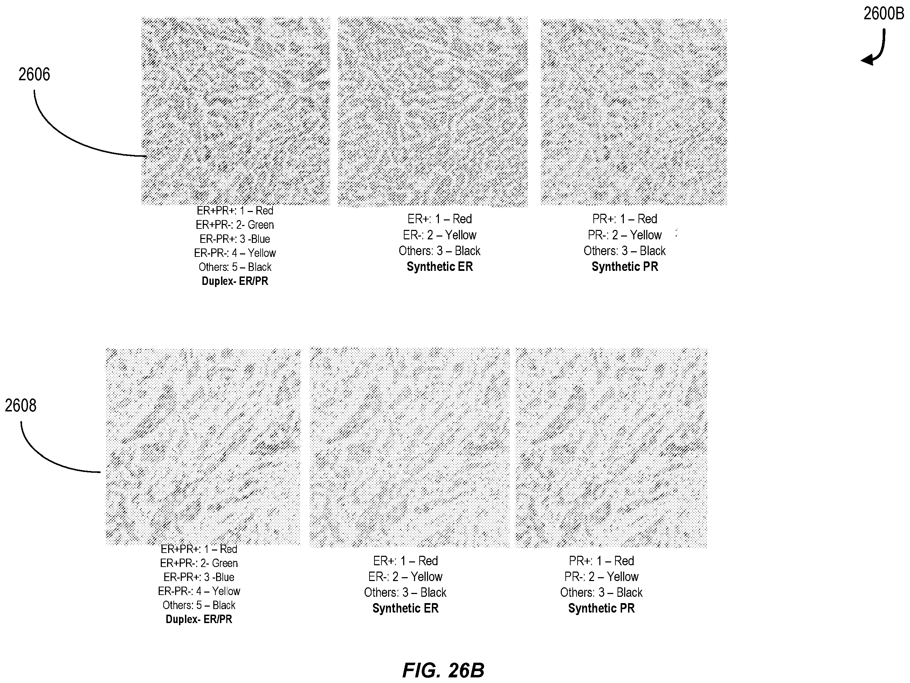

FIG. 26A-B depict additional examples of duplex ER/PR with different types of merged phenotypes. FIG. 26A shows an example of ER+/PR+ co-expression in duplex ER/PR 2602, and an example of PR+ dominance in duplex ER/PR 2604. FIG. 26B shows an example of ER+ dominance in duplex ER/PR 2606, and an example of tumor negative dominance in duplex ER/PR 2608.

### X. ADDITIONAL CONSIDERATIONS

Some embodiments of the present disclosure include a system including one or more data processors. In some embodiments, the system includes a non-transitory computer readable storage medium containing instructions which, when executed on the one or more data processors, cause the one or more data processors to perform part or all of one or more methods and/or part or all of one or more processes disclosed herein. Some embodiments of the present disclosure include a computer-program product tangibly embodied in a non-transitory machine-readable storage medium, including instructions configured to cause one or more data processors to perform part or all of one or more methods and/or part or all of one or more processes disclosed herein.

The terms and expressions which have been employed are used as terms of description and not of limitation, and there is no intention in the use of such terms and expressions of excluding any equivalents of the features shown and described or portions thereof, but it is recognized that various modifications are possible within the scope of the invention claimed. Thus, it should be understood that although the present invention as claimed has been specifically disclosed by embodiments and optional features, modification and variation of the concepts herein disclosed may be resorted to by those skilled in the art, and that such modifications and variations are considered to be within the scope of this invention as defined by the appended claims.

The ensuing description provides preferred exemplary embodiments only, and is not intended to limit the scope, applicability or configuration of the disclosure. Rather, the ensuing description of the preferred exemplary embodiments will provide those skilled in the art with an enabling description for implementing various embodiments. It is understood that various changes may be made in the function and arrangement of elements without departing from the spirit and scope as set forth in the appended claims.

Specific details are given in the following description to provide a thorough understanding of the embodiments. However, it will be understood that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

The following numbered paragraphs (paras.) which form part of the description contain further statements of various aspects of the present invention:
1. A method comprising:
   accessing a digital pathology image depicting at least part of a biological sample that is stained for a first type of biomarker and a second type of biomarker;
   unmixing the digital pathology image to generate:
      a first synthetic singleplex image depicting the at least part of the biological sample for which the first type of biomarker is identified; and
      a second synthetic singleplex image depicting the at least part of the biological sample from which the second type of biomarker is identified;
   applying a first machine-learning model to the first synthetic singleplex image to:
      detect a first plurality of cells from the first synthetic singleplex image; and
      determine, for each cell of the first plurality of cells, a classification of a first set of classifications, the classification of the first set indicating whether the cell includes a biomarker having the first biomarker type;
   applying a second machine-learning model to the second synthetic singleplex image to:
      detect a second plurality of cells from the second synthetic singleplex image; and
      determine, for each cell of the second plurality of cells, a classification of a second set of classifications, the classification of the second set indicating whether the cell includes a biomarker having the second biomarker type, wherein the first set of classifications are different from the second set of classifications;
   merging the classifications of the first plurality of cells and the classifications of the second plurality of cells to generate merged classifications; and
   outputting the digital pathology image with merged classifications.
2. The method of para. 1, wherein determining the classifications for the first plurality of cells includes:
   generating a first set of probability maps, wherein each probability map of the first set of probability maps includes a plurality of pixels and is associated with a classification of the first set of classifications, wherein the probability map identifies, for each pixel of the plurality of pixels, a probability value indicating whether the pixel corresponds to the classification; and
   for each cell of the first plurality of cells:
      identifying a probability map of the first set of probability maps that includes the highest probability value for one or more pixels that represent the cell; and
      assigning the cell with a classification associated with the identified probability map.
3. The method of para. 1 or para. 2, wherein determining the classifications for the second plurality of cells includes:
   generating a second set of probability maps, wherein each probability map of the second set of probability maps includes a plurality of pixels and is associated with a classification of the second set of classifications, wherein the probability map identifies, for each pixel of the plurality of pixels, a probability value indicating whether the pixel corresponds to the classification; and
   for each cell of the second plurality of cells:
      identifying a probability map of the second set of probability maps that includes the highest probability value for one or more pixels that represent the cell; and
      assigning the cell with a classification associated with the identified probability map.
4. The method of any one of paras. 1 to 3, wherein the first machine-learning model and/or the second machine-learning model includes a U-Net model.
5. The method of any one of paras. 1 to 4, wherein the first type of biomarker is an estrogen receptor protein and the second type of biomarker is a progesterone receptor protein.
6. The method of any one of paras. 1 to 5, wherein outputting the digital pathology image with merged classifications includes overlaying the merged classifications onto the digital pathology image.
7. The method of any one of paras. 1 to 6, wherein the digital pathology image with merged classifications is used as a training image for training a third machine-learning model.
8. The method of any one of paras. 1 to 7, wherein:
   determining the classifications for the first plurality of cells includes:
      generating a first set of probability maps, wherein each probability map of the first set of probability maps includes a plurality of pixels and is associated with a classification of the first set of classifications, wherein the probability map identifies, for each pixel of the plurality of pixels, a probability value indicating whether the pixel corresponds to the classification; and
   determining the classifications for the second plurality of cells includes:
      generating a second set of probability maps, wherein each probability map of the second set of probability maps includes a plurality of pixels and is associated with a classification of the second set of classifications, wherein the probability map identifies, for each pixel of the plurality of pixels, a probability value indicating whether the pixel corresponds to the classification;
   wherein the first set of probability maps and the second set of probability maps are merged to generate a set of anchor points, wherein each anchor point of the set of anchor points is assigned with a first classification of the first set of classifications and a second classification of the second set of classifications.
9. A computer product comprising a non-transitory computer readable medium storing a plurality of instructions that when executed control a computer system to perform the method of any one of the preceding claims.
10. A system comprising:
   the computer product of para. 9; and
   one or more processors for executing instructions stored on the computer readable medium.
11. A system comprising means for performing any of the above methods.
12. A system comprising one or more processors configured to perform any of the above methods.
13. A system comprising modules that respectively perform the steps of any of the above methods.

## Claims

1. A method comprising:
accessing a digital pathology image depicting at least part of a biological sample that is stained for a first type of biomarker and a second type of biomarker;
unmixing the digital pathology image to generate:
a first synthetic singleplex image depicting the at least part of the biological sample for which the first type of biomarker is identified; and
a second synthetic singleplex image depicting the at least part of the biological sample from which the second type of biomarker is identified;
processing the first synthetic singleplex image to:
determine, for each cell of a first plurality of cells in the first synthetic singleplex image, a classification of a first set of classifications, wherein the classification of the first set of classifications is determined based on generating a first set of probability maps, wherein each probability map of the first set of probability maps includes a plurality of pixels and is associated with a classification of the first set of classifications, wherein the probability map identifies, for each pixel of the plurality of pixels, a probability value indicating whether the pixel corresponds to the classification;
processing the second synthetic singleplex image to:
determine, for each cell of a second plurality of cells in the second synthetic singleplex image, a classification of a second set of classifications, wherein the classification of the second set of classifications is determined based on generating a second set of probability maps, wherein each probability map of the second set of probability maps includes a plurality of pixels and is associated with a classification of the second set of classifications, wherein the probability map identifies, for each pixel of the plurality of pixels, a probability value indicating whether the pixel corresponds to the classification, wherein the first set of classifications are different from the second set of classifications;
merging the classifications of the first plurality of cells and the classifications of the second plurality of cells to generate merged classifications; and
outputting the digital pathology image with merged classifications.

2. The method of claim 1, wherein determining the classifications for the first plurality of cells includes:
generating the first set of probability maps, wherein each probability map of the first set of probability maps includes the plurality of pixels and is associated with the classification of the first set of classifications, wherein the probability map identifies, for each pixel of the plurality of pixels, the probability value indicating whether the pixel corresponds to the classification; and
for each cell of the first plurality of cells:
identifying a probability map of the first set of probability maps that includes the highest probability value for one or more pixels that represent the cell; and
assigning the cell with a classification associated with the identified probability map.

3. The method of claim 1 or claim 2, wherein determining the classifications for the second plurality of cells includes:
generating the second set of probability maps, wherein each probability map of the second set of probability maps includes the plurality of pixels and is associated with the classification of the second set of classifications, wherein the probability map identifies, for each pixel of the plurality of pixels, the probability value indicating whether the pixel corresponds to the classification; and
for each cell of the second plurality of cells:
identifying a probability map of the second set of probability maps that includes the highest probability value for one or more pixels that represent the cell; and
assigning the cell with a classification associated with the identified probability map.

4. The method of any one of claims 1 to 3, wherein processing the first synthetic singleplex image comprises applying a first trained machine-learning model to the first synthetic singleplex image.

5. The method of claim 4, wherein the first trained machine-learning model is trained based on a first training synthetic singleplex image depicting a first type of biomarker and a first set of training labels identifying cells in the first training synthetic singleplex image and phenotypes of the cells for the first type of biomarker.

6. The method of any one of claims 1 to 5, wherein processing the second synthetic singleplex image comprises applying a second trained machine-learning model to the second synthetic singleplex image.

7. The method of claim 6, wherein the second trained machine-learning model is trained based on a second training synthetic singleplex image depicting a second type of biomarker and a second set of training labels identifying cells in the second training synthetic singleplex image and phenotypes of the cells for the second type of biomarker.

8. The method of any one of claims 4 to 7, wherein the first trained machine-learning model and/or the second trained machine-learning model includes a U-Net model.

9. The method of any one of claims 1 to 8, wherein the first type of biomarker is an estrogen receptor protein and the second type of biomarker is a progesterone receptor protein.

10. The method of any one of claims 1 to 9, wherein outputting the digital pathology image with merged classifications includes overlaying the merged classifications onto the digital pathology image.

11. The method of any one of claims 1 to 10, wherein the digital pathology image with merged classifications is used as a training image for training a third machine-learning model.

12. The method of any one of claims 1 to 11, wherein:
the first set of probability maps and the second set of probability maps are merged to generate a set of anchor points, wherein each anchor point of the set of anchor points is assigned with a first classification of the first set of classifications and a second classification of the second set of classifications.

13. A computer product comprising a non-transitory computer readable medium storing a plurality of instructions that when executed control a computer system to perform the method of any one of the preceding claims.

14. A system comprising:
the computer product of claim 13; and
one or more processors for executing instructions stored on the computer readable medium.
